# EUROPEAN PATENT SPECIFICATION

(11) **EP 0 433 772 B1**
(45) Date of publication and mention of the grant of the patent: **08.03.1995**
(21) Application number: 90123338.7
(22) Date of filing: 05.12.1990
(51) Int. Cl.: F01N 3/20

(54) **Exhaust gas purification system for an internal combustion engine**
Abgasreinigungssystem für eine Brennkraftmaschine
Système de purification de gas d'échappement pour moteur à combustion interne

(30) Priority: 06.12.1989 JP 315175/89; 15.12.1989 JP 144133/89 U; 24.05.1990 JP 132530/90; 25.06.1990 JP 164092/90; 26.06.1990 JP 165775/90; 26.11.1990 JP 317664/90
(43) Date of publication of application: 26.06.1991
(73) Proprietor: TOYOTA JIDOSHA KABUSHIKI KAISHA, Aichi-ken (JP)
(72) Inventor: Takeshima, Sinichi, Toyota-shi, Aichi-ken (JP); Katoh, Kenji, Toyota-shi, Aichi-ken (JP); Hirota, Sinya, Toyota-shi, Aichi-ken (JP)
(74) Representative: Tiedtke, Harro, Dipl.-Ing.

(56) References cited:
- DE-A- 2 815 456
- FR-A- 1 413 228
- FR-A- 2 187 013
- US-A- 4 315 895
- US-A- 4 394 351
- US-A- 4 404 795
- US-A- 4 583 363
- PATENT ABSTRACTS OF JAPAN, vol. 14, no. 23 (M-920), 17th January 1990; & JP-A-01 262 311 (TOYOTA MOTOR) 19-10-1989
- PATENT ABSTRACTS OF JAPAN, vol. 7, no. 68 (M-201)[1213], 19th March 1983; & JP-A-57 210 116 (TOYOTA JIDOSHA) 23-12-1982
- PATENT ABSTRACTS OF JAPAN, vol. 13, no. 591 (M-913)[3939], 26th December 1989; & JP-A-01 247 710 (TOYOTA MOTOR) 03-10-1989
- PATENT ABSTRACTS OF JAPAN, vol. 13, no. 447 (C-642)[3795], 6th October 1989; & JP-A-01 171 625 (TOYOTA CENTRAL) 06-07-1989
- PATENT ABSTRACTS OF JAPAN, vol. 10, no. 299 (M-524)[2355], 11th October 1986; & JP-A-61 112 715 (TOYOTA MOTOR) 30-05-1986
- PATENT ABSTRACTS OF JAPAN, vol. 13, no. 394 (C-631)[3742], 31st August 1989; & JP-A-01 139 144 (TOYOTA MOTOR CORP.) 31-05-1989
- PATENT ABSTRACTS OF JAPAN, vol. 9, no. 130 (C-284)[1853], 5th June 1985; & JP-A-60 018 502 (MITSUBISHI YUKA) 30-01-1985
- PATENT ABSTRACTS OF JAPAN, vol. 6, no. 113 (M-138)[991], 24th June 1982; & JP-A-57 41 440 (TOYOTA JIDOSHA) 08-03-1982
- PATENT ABSTRACTS OF JAPAN, vol. 14, no. 544 (C-784), 4th December 1990; & JP-A-2 233 145 (TOYOTA MOTOR) 14-09-1990

## Description

The present invention relates to an exhaust gas purification system for an internal combustion engine according to the preamble of claim 1, said system being provided with a catalyst capable of reducing nitrogen oxides (hereinafter, NOx) under an oxidizing gas condition and in the presence of hydrocarbons. More particularly, the present invention relates to an exhaust gas purification system wherein a NOx purification rate of the catalyst is increased.

Various characteristics are demanded for automobile internal combustion engines, for example, an excellent gas mileage characteristic and a small exhaust of carbon monoxide and hydrocarbon emissions. As an engine which can satisfy these various demands, an internal combustion engine executing fuel combustion at lean air-fuel ratios (hereinafter, a lean burn engine) is noticed. However, in the lean burn engine, NOx reduction by a three-way catalyst cannot be expected, and therefore, an alternative means for reducing NOx needs to be developed.

According to document JP-A-01 171 625, there is known a generic exhaust gas purification system for an internal combustion engine comprising a catalyst capable of reducing NOx in the presence of hydrocarbons even under an oxidizing gas condition. This exhaust gas purification system furthermore comprises a second catalyst constituted of another kind of substance and a means for introducing the exhaust gas into this second catalyst when the higher temperature of the exhaust gas is detected in order to protect the first catalyst and to improve the thermal durability characteristic thereof. The means for preventing thermal degradation of the catalyst comprises a switching valve switching when a critical temperature is detected, which, when surpassed, would lead to a thermal degradation of the catalyst. Thus, the critical excessive limit temperature of the catalyst is always included in the catalyst temperature range due to the purpose of the temperature regulation. By means of this system it is impossible to obtain a high NOx- purification rate or an NOx-reduction rate of the catalyst, respectively.

An object of the invention is to provide an exhaust gas purification system with a catalyst capable of reducing NOx under an oxidizing gas condition and in the presence of hydrocarbons wherein a NOx purification rate of the catalyst is increased.

This object is achieved by means of the features defined in the characterizing part of claim 1. According to these features, the purification system comprises means for repeatedly producing a catalyst temperature rising condition for more strongly reducing the nitrogen oxides within a predetermined catalyst temperature range below the excessive limit temperature critical for the purification function of the catalyst by repeatedly executing a cycle of cooling the catalyst and then stopping the cooling to allow the catalyst to rise in temperature.

The object of the invention can be attained in particular by an exhaust gas purification system for an internal combustion engine in accordance with the present invention which includes an internal combustion engine capable of executing fuel combustion at lean air-fuel ratios, a catalyst installed in an exhaust conduit of the engine and constructed of zeolite carrying at least one kind of metal selected from transition metals and noble metals to reduce NOx included in exhaust gas from the engine under an oxidizing gas condition and in the presence of hydrocarbons (hereinafter, a lean NOx catalyst), and means for repeatedly producing a catalyst temperature rising condition by repeatedly executing a cycle of cooling the catalyst and then stopping the cooling to allow the catalyst to rise in temperature.

According to the tests by the inventors, the lean NOx catalyst can show a higher NOx purification rate in a catalyst temperature rising course than in a catalyst temperature lowering course. In the present invention, since the cycle of cooling the lean NOx catalyst and then stopping the cooling to allow the lean NOx catalyst to rise in temperature is repeated, the catalyst temperature rising courses are positively and repeatedly produced. As a result, the NOx purification rate of the lean NOx catalyst is greatly increased. Preferable embodiments of the invention are defined in the claims 2 to 27.

The above and other objects, features, and advantages of the present invention will become more apparent and will be more readily appreciated from the following detailed description of the preferred embodiments of the invention taken in conjunction with the accompanying drawings, in which:
FIG. 1 is a schematic system diagram of an exhaust gas purification system in accordance with first through third embodiments of the present invention;
FIG. 2 is a detailed system diagram in accordance with the first through third embodiments of the present invention;
FIG. 3 is a block diagram illustrating relationships between control elements in accordance with the first through third embodiments of the present invention;
FIG.4 is a control flow chart of the first embodiment of the present invention;
FIG. 5 is a diagram illustrating a flag operation of the first embodiment of the present invention;
FIG. 6 is a control flow chart of the second embodiment of the present invention;
FIG. 7 is a control flow chart of a modification of the second embodiment of the present invention;
FIG. 8 is a control flow chart of the third embodiment of the present invention;
FIG. 9 is a diagram illustrating a relationship between exhaust gas temperature and NOx purification rate;
FIG. 10 is a diagram illustrating a difference between a NOx purification characteristic in temperature lowering course and a NOx purification characteristic in temperature rising course;
FIG. 11 is a diagram illustrating degradation of a lean NOx catalyst;
FIG. 12 is schematic system diagram of an exhaust gas purification system for an internal combustion engine in accordance with a fourth embodiment of the present invention.
FIG. 13 is a detailed system diagram of the fourth embodiment of the present invention;
FIG. 14 is a control flow chart of the fourth embodiment of the present invention;
FIG. 15 is an entire system diagram of the fourth embodiment of the present invention;
FIG. 16 is a block diagram illustrating a NOx reduction mechanism of a lean NOx catalyst;
FIG. 17 is a diagram illustrating a relationship between lean NOx catalyst temperature and NOx purification rate;
FIG. 18 is a system block diagram of an exhaust gas purification system for an internal combustion engine in accordance with the fifth embodiment of the present invention;
FIG. 19 is a detailed system diagram of the fifth embodiment of the present invention;
FIG. 20 is a control flow chart of the fifth embodiment of the present invention;
FIG. 21 is a map illustrating a relationship between exhaust gas temperature and period of time of air pump operation;
FIG. 22 is a graph illustrating a NOx concentration characteristic and a lean NOx catalyst temperature characteristic with respect to time elapsed after beginning of cooling;
FIG. 23 is a graph illustrating a relationship between lean NOx catalyst temperature and NOx purification rate;
FIG. 24 is a graph illustrating a detailed relationship between exhaust gas temperature and NOx purification rate;
FIG. 25 is a schematic system diagram illustrating an exhaust gas purification system for an internal combustion engine in accordance with a sixth embodiment of the present invention;
FIG. 26 is a control flow chart of the sixth embodiment of the present invention;
FIG. 27 is a schematic system diagram illustrating an exhaust gas purification system for an internal combustion engine in accordance with a seventh embodiment of the present invention;
FIG. 28 is a schematic cross-sectional view of a lean NOx catalyst with two sections, of the seventh embodiment;
FIG. 29 is a schematic cross-sectional view of a lean NOx catalyst with three sections, of the seventh embodiment;
FIG. 30 is a schematic cross-sectional view of a lean NOx catalyst with four sections, of the seventh embodiment;
FIG. 31 is a schematic cross-sectional view of a lean NOx catalyst with five sections, of the seventh embodiment;
FIG. 32 is a control flow chart of the seventh embodiment;
FIG. 33 is a graph illustrating a temperature variation of a lean NOx catalyst;
FIG. 34 is a graph illustrating a difference in NOx purifacation rate between a case where the catalyst is cooled and a case where the catalyst is not cooled;
FIG. 35 is a schematic system diagram for an internal combustion engine in accordance with an eighth embodiment of the present invention;
FIG. 36 is a control flow chart of the eighth embodiment of the present invention;
FIG. 37 is a flow chart of a sub-routine needed in the calculation according to the routine of FIG. 36;
FIG. 38 is a map illustrating a relationship between exhaust gas temperature and engine speed/engine load;
FIG. 39 is a graph illustrating a relationship between lean NOx catalyst temperature and NOx purification rate for use in explanation of ninth and tenth embodiments of the present invention;
FIG. 40 is a schematic system diagram of an exhaust gas purification system for an internal combustion engine in accordance with a ninth embodiment of the present invention;
FIG. 41 is a control flow chart of the ninth embodiment of the present invention;
FIG. 42 is a schematic system diagram of an exhaust gas purification system for an internal combustion engine in accordance with a tenth embodiment of the present invention; and
FIG. 43 is a control flow chart of the tenth embodiment of the present invention.

Ten embodiments will be explained below. irstly, relationships between FIGS. and embodi- ients of the invention will be explained.

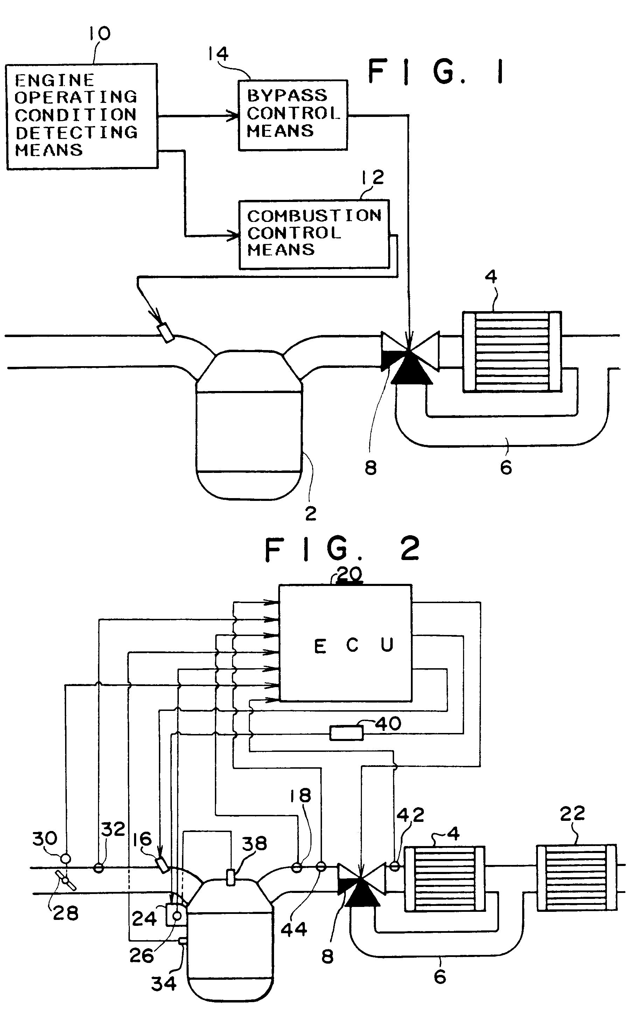

FIGS. 1-11 correspond to first through third mbodiments wherein a bypass conduit bypassing lean NOx catalyst is provided and exhaust gas flow is repeatedly switched between the bypass conduit and the lean NOx catalyst to repeatedly execute a cycle of cooling the catalyst and then stopping the cooling.

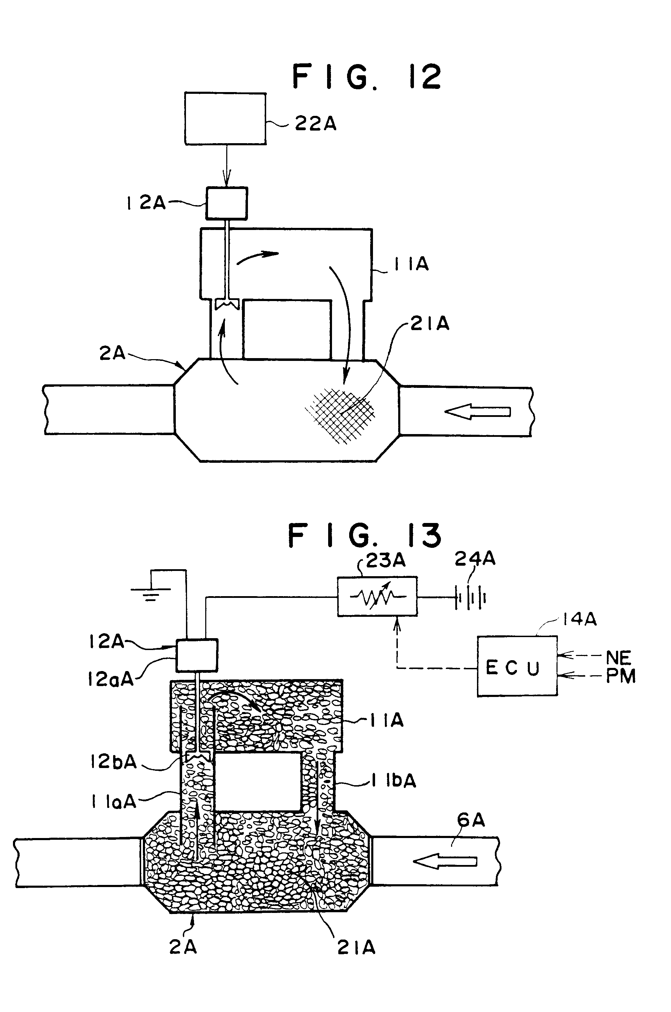

FIGS. 12-17 correspond to a fourth embodiment wherein a lean NOx catalyst is constructed in the form of pellets, and the catalyst pellets are circulated between a catalytic converter case and a cooling chamber to execute a cycle of cooling the catalyst and stopping the cooling.

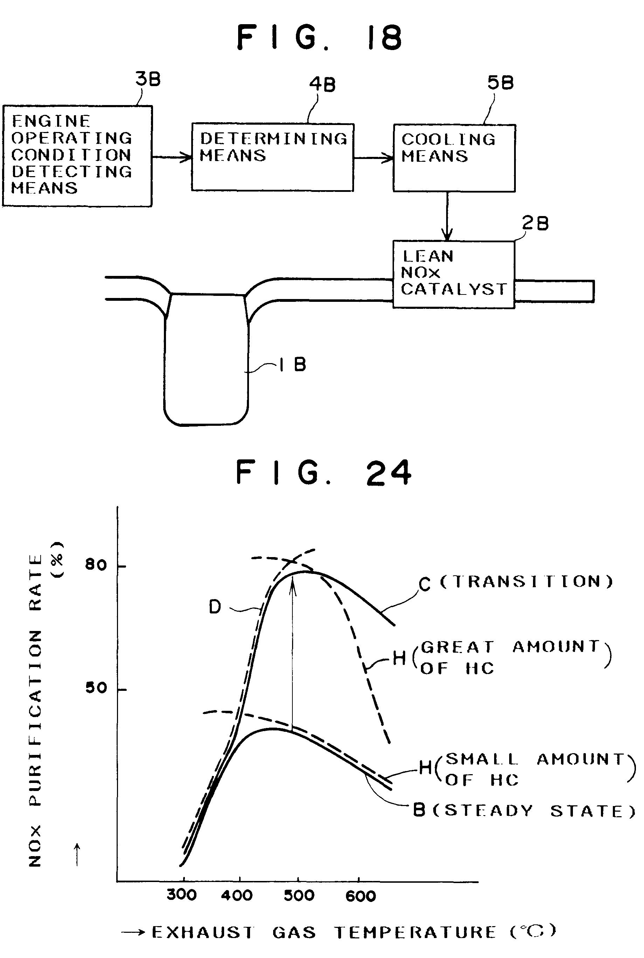

FIGS. 18-24 correspond to a fifth embodiment wherein secondary air is intermittently injected into an exhaust gas conduit at a position upstream of a lean NOx catalyst to repeatedly execute a cycle of cooling the catalyst and then stopping the cooling.

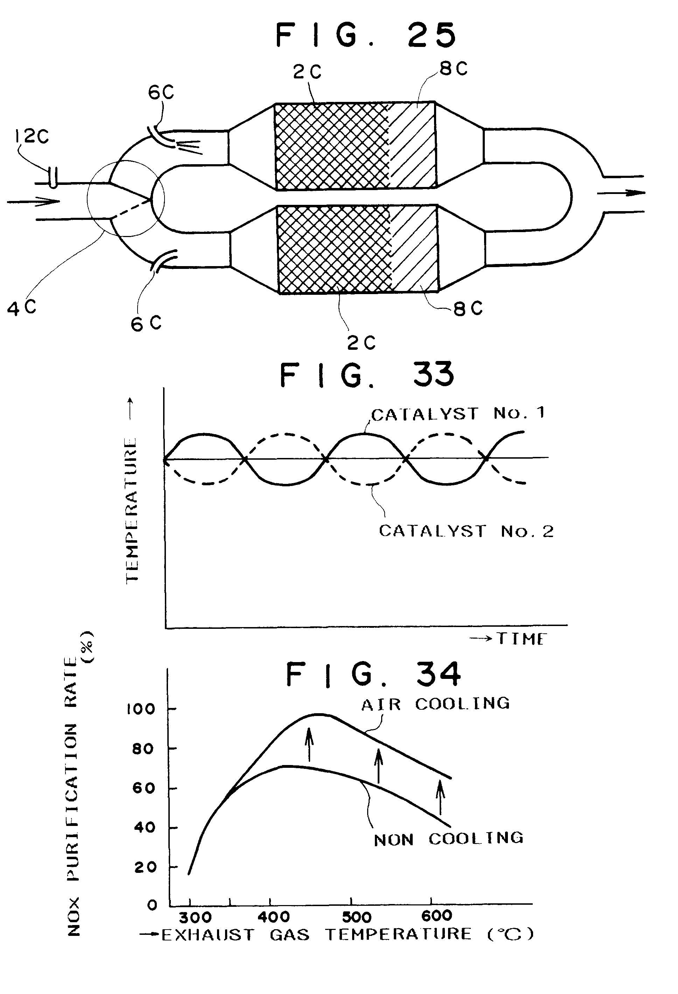

FIGS. 25-34 correspond to sixth and seventh embodiments wherein a lean NOx catalyst is divided into a plurality of portions arranged in parallel with each other and exhaust gas flow is switched between the plurality of portions to repeatedly execute a cycle of cooling the catalyst and then stopping the cooling.

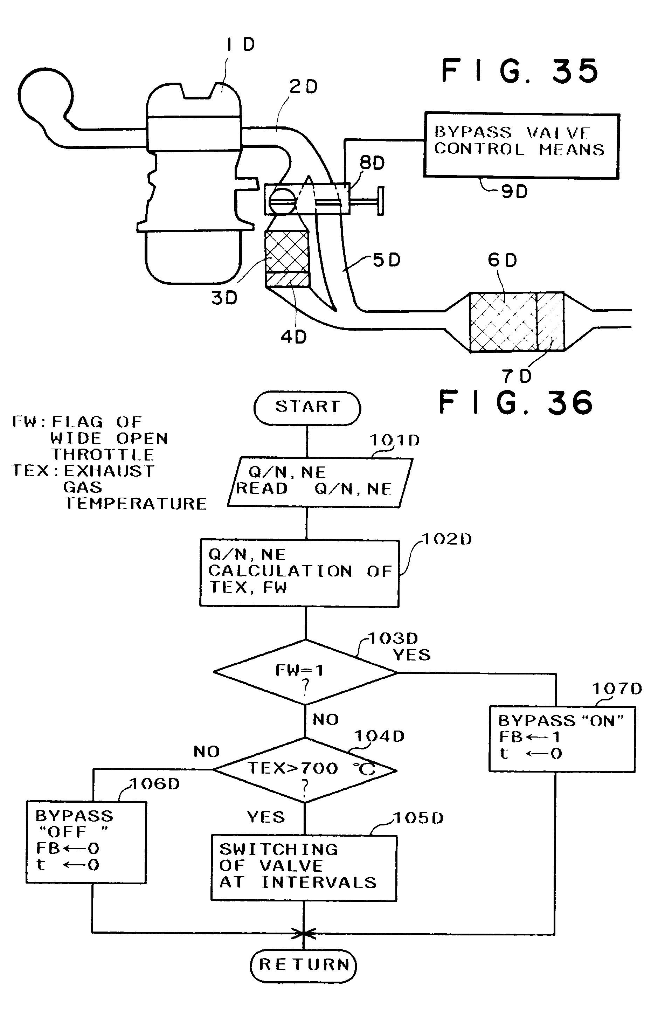

FIGS. 35-38 correspond to an eighth embodiment wherein a lean NOx catalyst is divided into a first portion and a second portion located downstream of the first portion and a bypass conduit is provided to the first portion of catalyst so that exhaust gas flow is switched between the first portion of catalyst and the bypass conduit to repeatedly execute a cycle of cooling the first catalyst and then stopping the cooling.

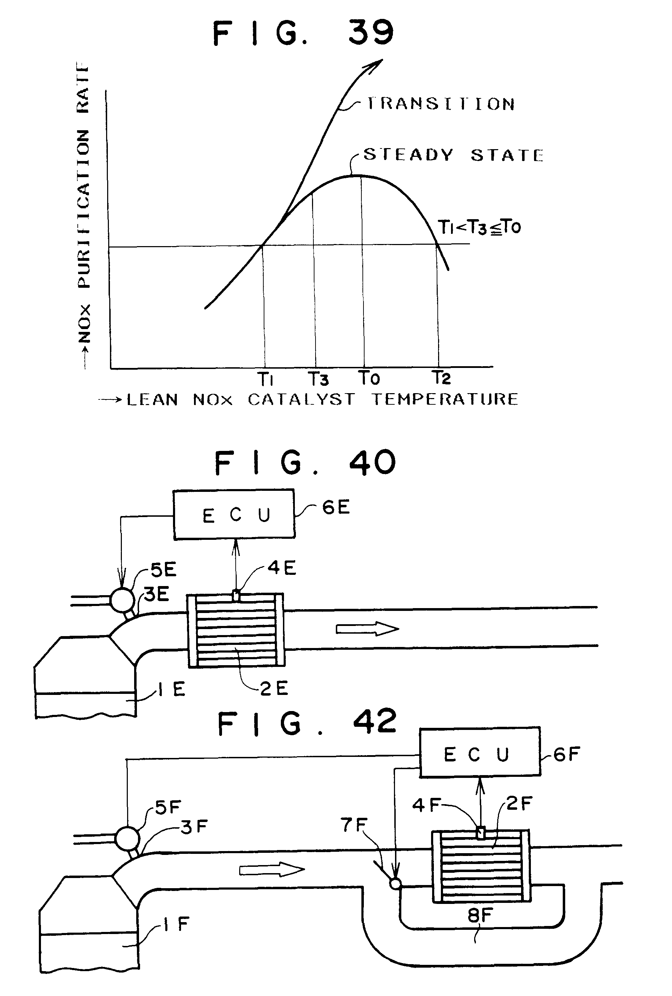

FIGS. 39-41 correspond to ninth and tenth embodiments wherein when the lean NOx catalyst temperature exceeds a first temperature, the lean NOx catalyst is cooled to a second temperature, and the cycle is repeated.

Each embodiment will be explained in more detail below.

### FIRST THROUGH THIRD EMBODIMENTS

As illustrated in FIG. 1, an exhaust gas purification system for an internal combustion engine in accordance with the first through third embodiments generally includes an internal combustion engine 2 capable of executing fuel combustion at lean air-fuel ratios, a lean NOx catalyst 4 installed in an exhaust conduit of the engine, a bypass conduit 6 connected to the exhaust conduit so as to bypass the lean NOx catalyst 4, a bypass valve 8 adapted to switch exhaust gas flow between the lean NOx catalyst 4 and the bypass conduit 6, engine operating condition detecting means 10 for detecting the engine operating condition, catalyst temperature detecting means 42 (see FIG. 2) for detecting the temperature of the lean NOx catalyst 4 or exhaust gas, and means for repeatedly producing a catalyst temperature rising condition by repeatedly executing a cycle of cooling the catalyst 4 and then stopping the cooling to allow catalyst 4 to rise in temperature. The system further includes combustion control means 12 for calculating a fuel injection amount and fuel injection timing on the basis of the detected engine operating condition and executing the calculated fuel injection and ignition.

The means for repeatedly producing a catalyst temperature rising condition includes bypass control means 14 for controlling switching of the bypass valve 8.

More particularly, in the first embodiment, the bypass control means 14 switches on the bypass valve 8 to cause the exhaust gas to flow through the bypass conduit 6 when the engine operating condition is a condition where NOx exhaust is small and the catalyst temperature is equal to or higher than a first predetermined temperature (for example, 450 _{°} C) and switches off the bypass valve 8 to cause the exhaust gas to flow through the lean NOx catalyst 4 when the catalyst temperature is equal to or lower than a second predetermined temperature (for example, 300 _{°} C) which is lower than the first predetermined temperature.

In the second embodiment, the bypass control means 14 switches on the bypass valve 8 to cause the exhaust gas to flow through the bypass conduit 6 when the engine operating condition is a condition where purification of NOx by the lean NOx catalyst cannot be expected and the catalyst temperature is equal to or higher than a first predetermined temperature (for example, 450 °C) and switches off the bypass valve 8 to cause the exhaust gas to flow through the lean NOx catalyst 4 when the catalyst temperature is equal to or lower than a second predetermined temperature (for example, 300 °C) which is lower than the first predetermined temperature.

In the third embodiment, the bypass control means repeats switching on and switching off of the bypass valve 8 at regular intervals when the catalyst temperature exceeds a predetermined temperature, for example 300 _{°} C.

FIG. 2 illustrates more particular structures which are common to the first through third embodiments. As illustrated in FIG. 2, a throttle valve 28 and a fuel injection valve 16 are installed in an intake conduit of the engine 2. In the case of a gasoline engine, an ignition plug 38 is installed for every cylinder, though a plug is not provided in a diesel engine. A three-way catalyst 22 may be provided in a portion of the exhaust conduit downstream of the lean NOx catalyst 4, though the three-way catalyst 22 is not absolutely needed.

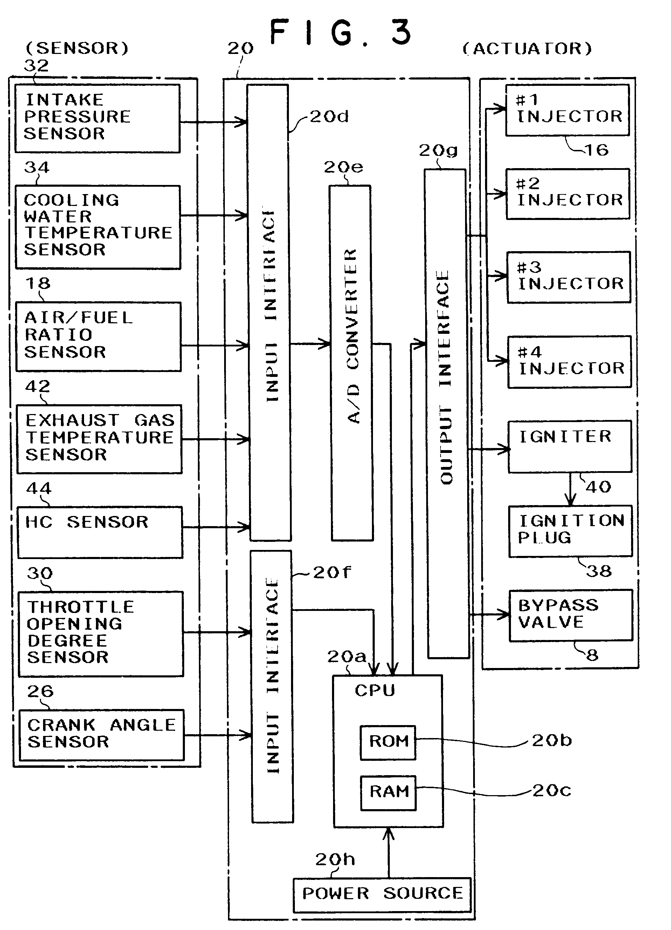

Fuel injection, ignition, and bypass control are performed in accordance with the instructions from an engine control computer 20 (hereinafter, ECU). The signals from various engine operating condition detecting means are fed to the ECU 20. As illustrated in FIGS. 2 and 3, the engine operating condition detecting means includes a crank angle sensor 26 which is housed in a distributor 24. The output signal from the sensor 26 is used for a timing signal for calculation of fuel injection and an engine speed NE. The engine operating condition detecting means further includes an intake pressure sensor 32 whose output signal is used for a signal of an intake pressure PM. The engine operating condition detecting means 10 further includes an engine cooling water temperature sensor 34, an air-fuel ratio sensor 18, a throttle opening degree sensor 30, an exhaust gas temperature sensor 42 (which may be a catalyst inlet gas temperature sensor, a catalyst temperature sensor, or a catalyst outlet gas temperature sensor), and a hydrocarbon sensor 44.

As illustrated in FIG. 3, the ECU 20 includes a central processor unit (CPU) 20a, a read-only memory (ROM) 20b, a random access memory (RAM) 20c, an input interface 20d for receiving analog signals, an analog/digital converter 20e, an input interface 20f for receiving digital signals, an output interface 20g, and a power source 20h. Calculation is executed at CPU 20a, and the outputs are sent through the output interface 20g to each fuel injection valve 16 to control the fuel injection and to the igniter 40 to control the ignition timing. Further, the outputs of the ECU 20 are sent to an actuator of the bypass valve 8 to perform the bypass control.

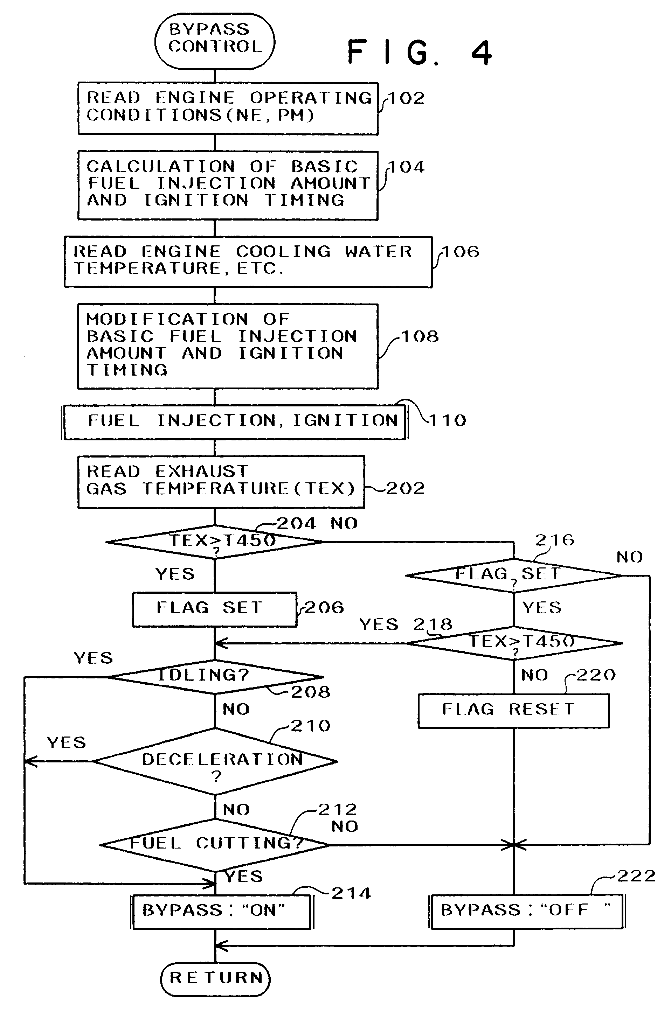

Calculation at the CPU 20a is performed in accordance with any one of the flow charts shown in FIGS. 4 and 6 to 8. Each routine includes a first portion for fuel injection and ignition timing control and a second portion for bypass control. The first portion is common to the first through third embodiments of the invention.

The first portion will be explained with reference to, for example, FIG. 4. In FIG. 4, at step 102, the signals from the engine operating condition detecting means 10 are read. The signals includes at least signals of engine speed NE and intake pressure PM. Then, at step 104, a basic fuel injection amount TP is calculated on the basis of intake pressure PM and engine speed NE so that a theoretical air-fuel ratio is obtained. Also, an injection timing is calculated at step 104. The basic fuel injection amount TP is usually modified taking various engine operating conditions into account. More particularly, at step 106, a signal THW from the engine cooling water temperature sensor and other signals are read. Then, at step 108, the basic fuel injection amount TP and the ignition timing are modified by the engine cooling water temperature THW, the engine speed modification factor KLEANNE, the intake pressure modification factor KLEANPM, the acceleration modification factor FACC, the throttle opening degree modification factor FPOWER, and the catalyst overheat prevention factor OTP into account, using the following equation:
TAU = TP * KLEANNE * KLEANPM * FWL
(1 + FACC + FPOWER + OTP)

Then, at step 110, TAU is set and fuel injection is performed by the period of time TAU, and ignition is executed. These steps 102 to 110 constitute the combustion control means 12 of FIG. 1.

Then, the routine proceeds to a bypass control routine, that is, the second portion of the routine in which the first through third embodiments differ from each other.

In the first embodiment, the lean NOx catalyst 4 is cooled in accordance with a control flow shown in FIG. 4 when a NOx exhaust amount is small and therefore reduction of NOx is not necessary. More particularly, at step 202, the exhaust gas temperature TEX is read. Then, the routine proceeds to a step 204 where whether or not the temperature TEX is greater then the first predetermined temperature T₄₅₀, for example 450 °C, is determined.

When TEX is greater than T₄₅₀, the routine proceeds to a step 206, and a flag F is set. When TEX is equal to or smaller than T₄₅₀ at step 204, the routine proceeds to a step 216 where whether the flag F is set or not is judged. When it is determined at step 216 that the flag F is set, the routine proceeds to a step 218 where whether or not TEX is greater than a second predetermined temperature T₃₀₀, for example 300 °C, is determined.

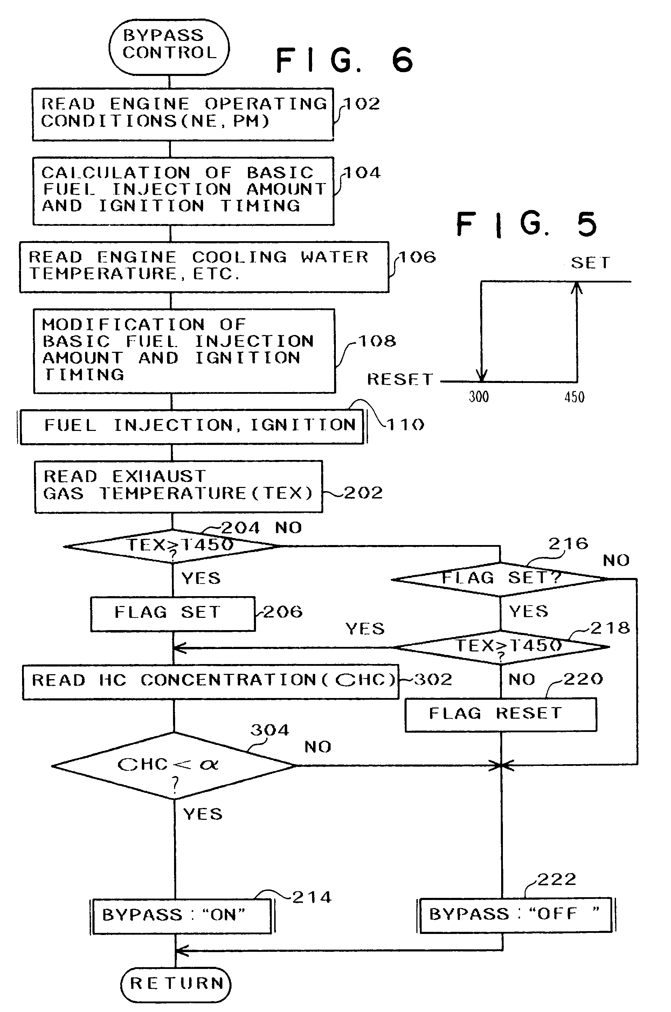

When TEX is equal to or smaller than T₃₀₀, for example 300 °C, the routine proceeds to a step 220 where the flag F is reset. Due to the above-described flag procedure, setting and resetting of the flag draws a hysteresis loop in a temperature rising and lowering cycle as shown in FIG. 5. When the flag F is in a set condition and a NOx exhaust amount is small, the bypass valve 8 is switched on so that the exhaust gas is caused to flow through the bypass conduit 6 to allow the lean NOx catalyst 4 to be cooled through natural heat release.

To execute the above-described cooling, when the flag F is in a set condition, the routine proceeds to a step 208, then to a step 210, and then to a step 212, where whether or not the engine operating condition is in a small NOx exhaust condition, such as an idling, deceleration, or fuel cutting condition, is determined. When a NOx exhaust amount is small, it is allowed to cause the exhaust gas not to flow through the lean NOx catalyst 4. Therefore, the routine proceeds to a step 214, where the bypass valve 8 is switched on. Since the exhaust gas flows through the bypass conduit 6 during "ON" of the bypass valve 8, the lean NOx catalyst 4 gradually decreases in temperature through heat release. On the other hand, when the flag F is in a reset condition, the routine proceeds to a step "222", where the bypass valve 8 is switched off. Since the exhaust gas flows through the lean NOx catalyst 4 during "OFF" of the bypass valve 8, the lean NOx catalyst temperature increases. After the procedure at step 214 or 216 is completed, the routine proceeds to a final step where the routine returns to another routine. The steps 202 to 222 correspond to the bypass control means 14 of FIG. 1.

In the second embodiment, cooling and temperature rising control of the lean NOx catalyst 4 is executed in accordance with a flow chart shown in FIG. 6 when reduction of NOx cannot be expected and therefore it is useless to cause the exhaust gas to flow through the lean NOx catalyst 4. Since steps 102 to 110 of FIG. 6 correspond to the steps 102 to 110 of FIG. 4, and steps 202 to 206 and 214 to 222 of FIG. 6 correspond to the steps 202 to 206 and 214 to 222 of FIG.4, the description therefor will be omitted. In the steps of FIG. 6, only steps 302 and 304 differ from the steps of FIG. 4.

More particularly, the hydrocarbon concentration C_{HC} of the exhaust gas is read at step 302. Then, the routine proceeds to a step 304 where whether or not C_{HC} is smaller than a predetermined hydrocarbon concentration "alpha" is determined. When C_{HC} is smaller than the predetermined concentration, NOx reduction cannot be expected. Therefore, the routine proceeds to a step 214 where the bypass valve 8 is switched on. On the other hand, when C_{CH} is determined to be equal to or greater than "alpha" at step 302, the routine proceeds to a step 222 where the bypass valve 8 is switched off.

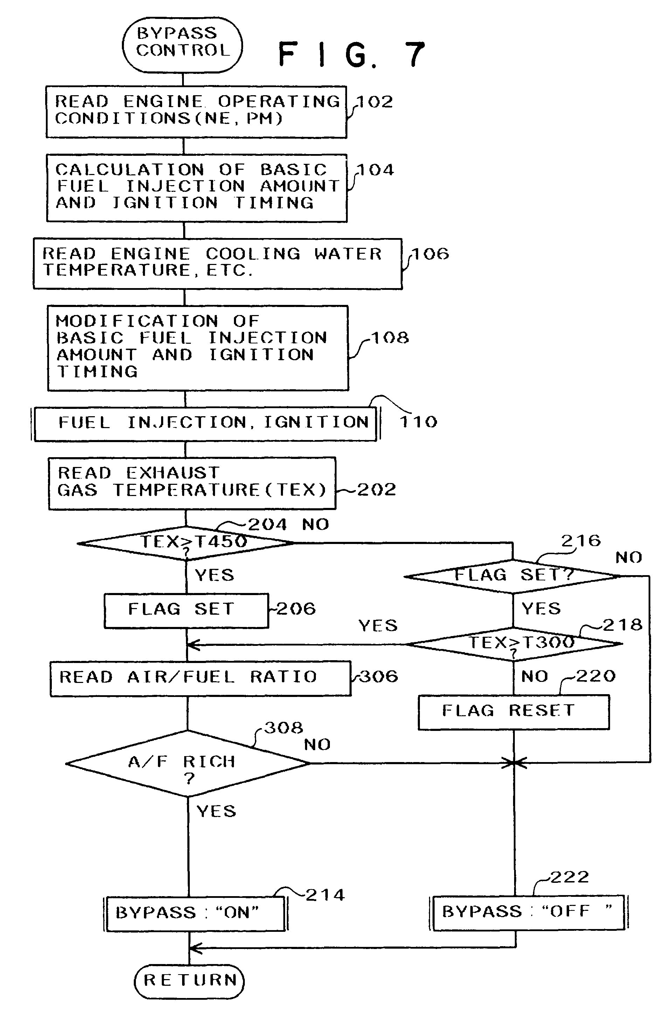

FIG. 7 illustrates a modification of the second embodiment where the exhaust gas is caused to flow through the bypass conduit 6 when the air-fuel ratio is rich and therefore NOx reduction cannot be expected. More particularly, in FIG. 7, an air-fuel ratio is read at step 306. Then, at the next step 308, whether or not the air-fuel ratio is rich is determined. When the air-fuel ratio is determined to be rich, NOx reduction by the lean NOx catalyst cannot be expected, and the routine proceeds to the step 214 where the bypass valve 8 is switched on. When the air-fuel ratio is determined to be lean at step 308, the routine proceeds to the step 222 where the bypass valve 8 is switched off. Since other steps are the same as those of FIG. 6, the description therefor will be omitted.

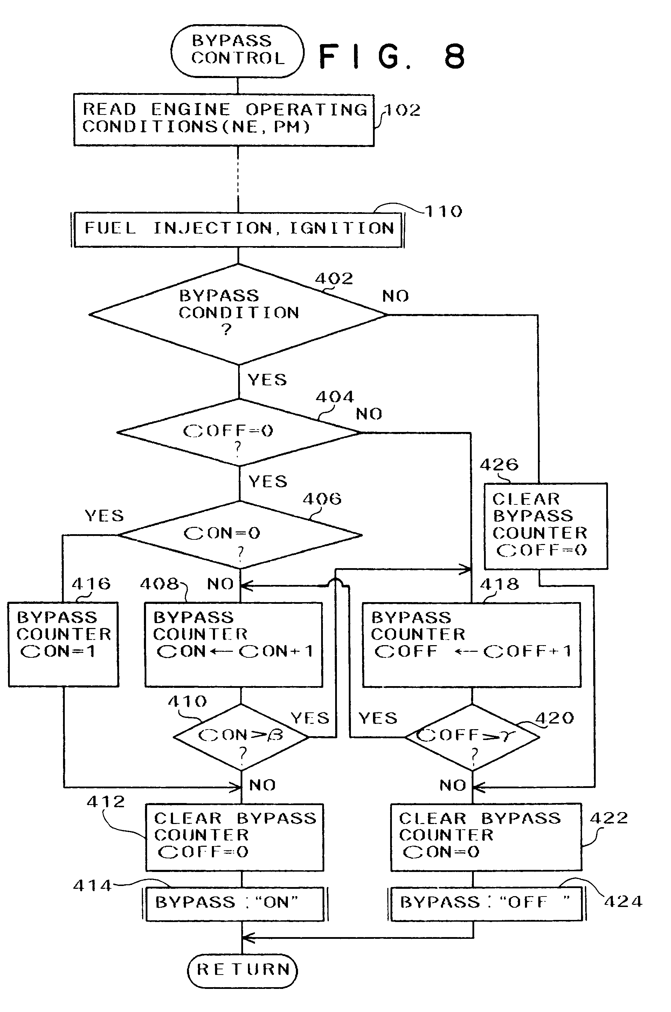

In the third embodiment, a cycle of "ON" and "OFF" of the bypass valve 8 is repeatedly executed in accordance with a flow chart of FIG. 8. Since steps 102-110 of FIG. 8 correspond to the steps 102-110 of FIG. 4, the description therefore will be omitted.

In FIG. 8, at step 402, whether or not the current engine operating condition is in a bypass condition, more particularly whether or not the exhaust gas temperature TEX is at a temperature between 300 °C and 600 °C is determined. When the engine operating condition is not in the bypass condition, it is useless to repeat the bypass ON/OFF cycle. Therefore, the routine proceeds to a step 426 where a bypass counter C_{OFF} is cleared, then to a step 422 where a bypass counter C_{ON} is cleared, and then to a step 424 where the bypass valve 8 is switched off.

When the engine operating condition is determined to be in the bypass condition at step 402, the routine proceeds to a step 404 to repeatedly execute the bypass "ON" and "OFF" cycle. When the routine proceeds to the step 404 for the first time, the bypass counters C_{OFF} and C_{ON} have been cleared at steps 404 and 406, and therefore the routine proceeds to a step 416. At step 416, the bypass counter C_{ON} is set to "1", and then at step 412, the bypass counter C_{OFF} is cleared, and finally at step 414, the bypass valve 8 is switched on.

When the routine proceeds to a step 406 at the next cycle of calculation, the bypass counter C_{ON} is negatively judged, and the routine proceeds to a step 408, where the bypass counter C_{ON} is increased by one. Until the increasing bypass counter C_{ON} finally exceeds a predetermined value "beta" at step 410, the routine proceeds to steps 412 and 414, and the bypass valve 8 is held "ON".

When the increased bypass counter C_{ON} finally exceeds "beta" at step 410, the routine proceeds to a step 418 where the bypass counter C_{OFF} is increased by one. Because the bypass counter C_{OFF} is at "1" " at step 404 in the next cycle of calculation, the routine proceeds from the step 404 to a step 418, where the bypass counter C_{OFF} isincreased by one. Then, the routine proceeds to a step 420. Until the increasing bypass counter C_{OFF} finally exceeds a predetermined valve "gamma", the routine proceeds to step 422 and then to step 424, and the bypass valve 8 is held "OFF". When the bypass counter C_{OFF} finally exceeds "gamma" at step 420, the routine proceeds to the step 408. As a result, the bypass valve continues "ON" for the period of time "beta", then the bypass valve continues "OFF" for the period of time "gamma", and a cycle of "ON" and "OFF" is repeated.

During the "ON" period of the bypass valve, the exhaust gas flows through the bypass conduit 6, and the temperature of the lean NOx catalyst 4 gradually decreases through natural heat release. On the other hand, during the "OFF" period of the bypass valve, the exhaust gas flows through the lean NOx catalyst 4, and the temperature of the lean NOx catalyst 4 increases, heated by the exhaust gas and due to exothermic reaction of the hydrocarbon at the catalyst. Since a cycle of cooling and non cooling is repeated, the temperature rising courses are positively and repeatedly produced, and the NOx purification rate of the lean NOx catalyst is greatly increased.

The operation of the first through third embodiments will now be explained.

When the temperature of the lean NOx catalyst 4 or the exhaust gas exceeds the first temperature (for example, 450 _{°} C), the exhaust gas is caused to flow through the bypass conduit 6 and the lean NOx catalyst temperature lowers. When the temperature of the lean NOx catalyst 4 lowers to the second temperature (for example, 300 _{°} C), the exhaust gas is caused to flow through the lean NOx catalyst 4, and the lean NOx catalyst temperature is increased.

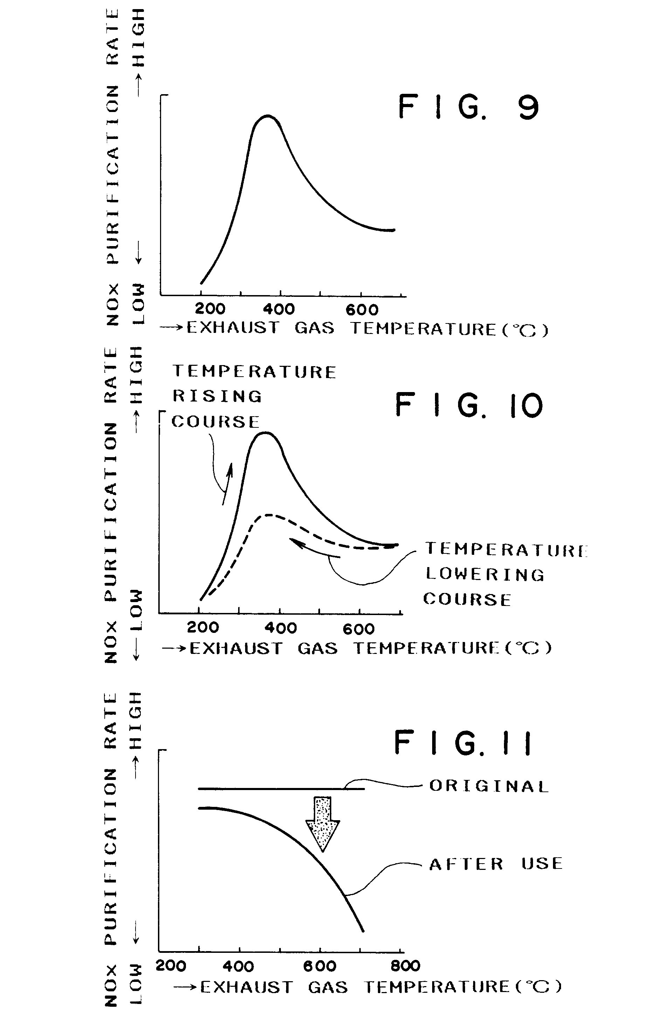

In this way, the temperature of the lean NOx catalyst 4 is controlled to be in a temperature range between the first temperature and the second temperature, where the lean NOx catalyst 4 can show a high NOx purification rate as shown in FIG. 9. Further, since the temperature of the lean NOx catalyst 4 is caused to repeat lowering and rising, the temperature rising courses are positively produced. The temperature rising course further increases the NOx reduction rate of the lean NOx catalyst.

As a result, in accordance with any one of the first through third embodiments, the NOx reduction rate is greatly increased.

### FOURTH EMBODIMENT

As illustrated in FIG. 12, an exhaust gas purification system for an internal combustion engine in accordance with the fourth embodiment generally includes an internal combustion engine 1A capable of executing fuel combustion at lean air-fuel ratios, a lean NOx catalyst constructed in the form of pellets 21A, a catalytic converter case 2A for housing the catalyst pellets 21A therein, a cooling chamber 11A communicating with the catalytic converter case 2A, circulating means 12A for circulating the catalyst pellets 21A between the converter case 2A and the cooling chamber 11A, and circulating velocity control means 23A (see FIG. 13) for controlling the circulation velocity of the catalyst pellets 21 A. The cooling chamber 11 A and the circulating means 12A constitute the catalyst temperature rising condition repeatedly producing means. The lean NOx catalyst 21 A is cooled in the cooling chamber 11A and is allowed to rise in temperature in the converter case 2A.

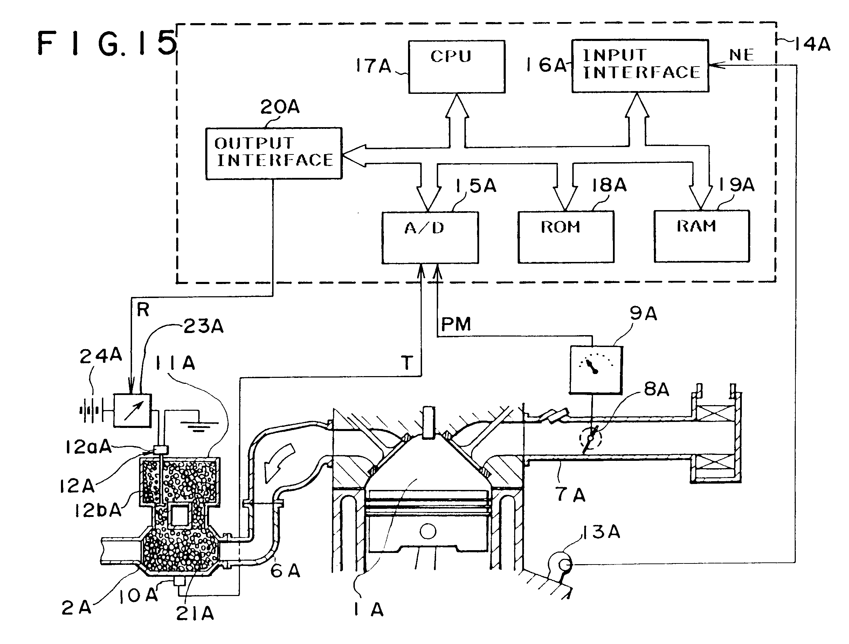

More particularly, as illustrated in FIGS. 13 and 15, the lean NOx catalyst 21A is installed in the converter case 2A provided in an exhaust conduit 6A. The cooling chamber 11A communicates with the interior of the converter case 2A via pipes 11 aA and 11 bB. The circulating means 12A includes a screw 12bA driven by a motor 12aA. Variable resistance means 23A is provided in an electrical circuit connecting the motor 12aA and a battery 24A so that the rotational speed of the screw 12bA is changed to thereby vary the circulation speed of the catalyst pellets 21A. The resistance is varied by outputs of an engine control computer (hereinafter, ECU) 14A. The variable resistance means 23A constitutes the circulation speed control means 22A.

Also, in an intake conduit 7A, a throttle valve 8A is installed. The opening degree of the throttle valve 8A is detected by a throttle opening degree sensor 9A whose output is used for an engine load signal PM. The temperature T of the lean NOx catalyst 21A is detected by a catalyst temperature sensor 10A. A distributor houses a crank angle sensor 13A whose output is used as a signal for entering the calculation and a signal for defining the engine speed NE. These signals are fed to the ECU.

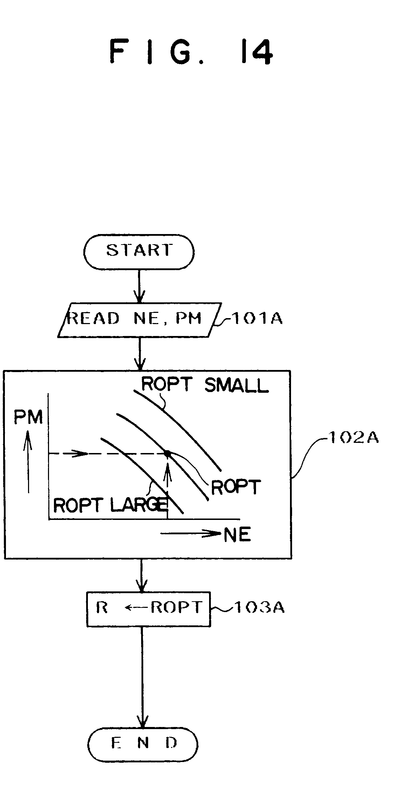

The ECU 14A includes an analog/digital converter 15A, an input interface 16A, a CPU 17A, a ROM 18A, a RAM 19A, and an output interface 20A. The CPU 17A calls therein the program of FIG. 14 which is stored in the ROM 18A. In FIG. 14, at step 101A, the engine speed NE and the engine load PM are read. Then, the routine proceeds to a step 102A, where an optimum resistance ROPT of the variable resistance 23A is calculated to obtain an optimum circulation speed which controls the temperature of the lean NOx catalyst 21A to a temperature which can realize a highest NOx purification rate. Then, the routine proceeds to a step 103A where the resistance of the variable resistance means 23A is adjusted to the optimum resistance ROPT.

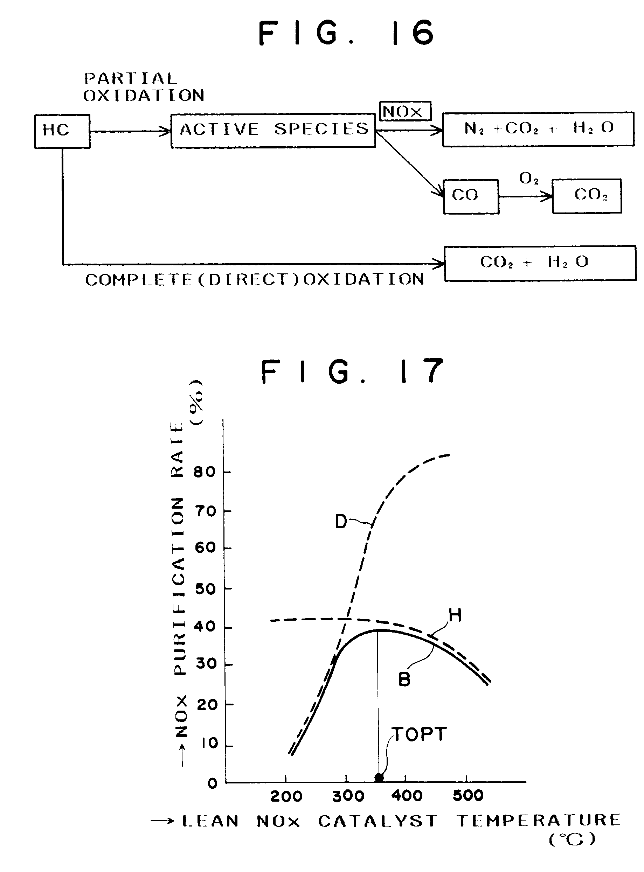

The operation of the fourth embodiment will now be explained. The exhaust gas from the internal combustion engine 1A flows through the exhaust conduit 6A to the catalytic converter and is purified by the lean NOx catalyst 21A. Since the exhaust gas of a lean burn engine includes an oxidizing gas, HC and CO are almost completely oxidized (burned) . and usually CO and HC emissions are below regulation values therefor. NOx included in the exhaust gas is purified according to a mechanism shown in FIG. 16.

More particularly, some active species (for example, species like CO-) is needed for the NOx reduction by the lean NOx catalyst 21 A. The active species is produced through partial oxidation of yet unburned hydrocarbon. The lower the temperature of the lean NOx catalyst is, the more the partial oxidation is promoted (see characteristic H of FIG. 17) and the more the active species is produced and stored in the cells of the catalyst. However, when the catalyst temperature is too low, the lean NOx catalyst loses its activity (see characteristic D of FIG. 17). As a result, the lean NOx purification rate characteristic has the form of a mountain as shown by curve B in FIG. 17.

Since the catalyst temperature is controlled to approach the temperature TOPT corresponding to the top of the mountain by controlling the circulation velocity, the NOx reduction rate is held high. Further, since the lean NOx catalyst 21A is alternately cooled and then allowed to rise in temperature when circulated, the NOx reduction rate is further improved.

### FIFTH EMBODIMENT

As shown in FIG. 18, an exhaust gas purification system for an internal combustion engine in accordance with the fifth embodiment generally includes an internal combustion engine 1 B capable of executing fuel combustion at lean air-fuel ratios, a lean NOx catalyst 2B installed in an exhaust conduit of the engine, engine operating condition detecting means 3B for detecting an operating condition of the engine, determining means 4B for determining whether or not the detected engine operating condition is in an idling condition or deceleration condition, and cooling means 5B for cooling the lean NOx catalyst 2B when the engine operating condition is determined to be in an idling condition or deceleration condition by the determining means 4B.

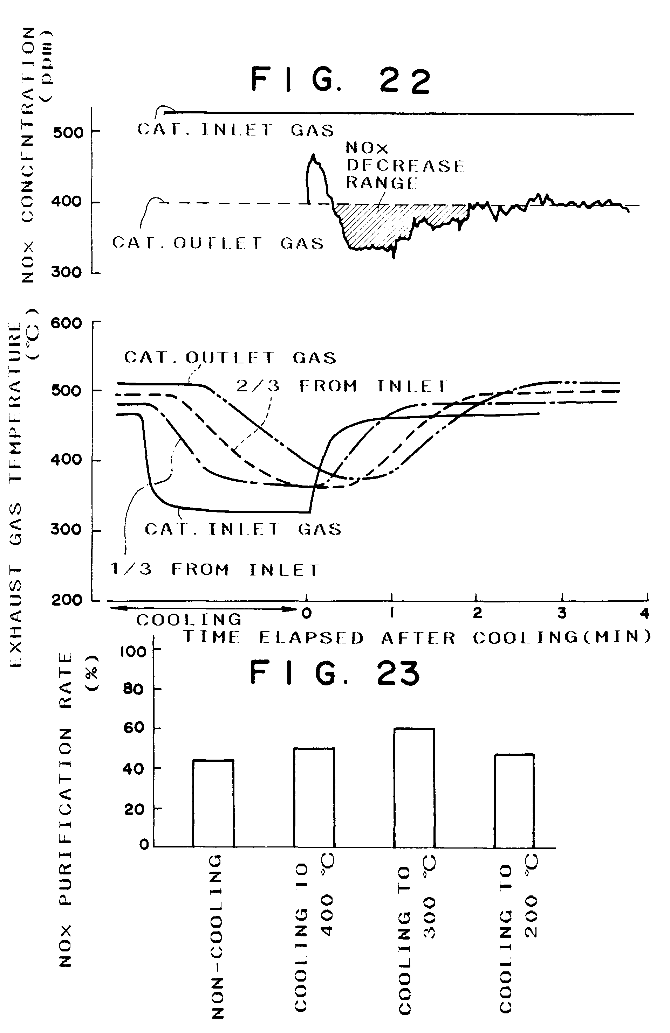

Through various tests, it was found by the inventors that the NOx reduction rate of the lean NOx catalyst 2B under a transition condition was greatly different from that of a normal condition. As illustrated in FIG. 22, when secondary air was introduced into the exhaust gas at a position upstream of the lean NOx catalyst to cool the catalyst, NOx in the exhaust gas was seen to be decreased during a few minutes after stopping the cooling. More particularly, the NOx reduction rate was found to increase from characteristic B to characteristic C in FIG. 24 for a few minutes.

The reason why the NOx reduction rate increases is believed to be as follows: During cooling, the lean NOx catalyst temperature lowers, and partial oxidation of hydrocarbon is promoted in the catalyst. As a result, a relatively great amount of active species is produced and stored in the small cells of the catalyst. Since activity of the lean NOx catalyst is small (see characteristic D of FIG. 24) when the catalyst is cooled, decrease in NOx exhaust cannot be seen in spite of the stored active species. However, after the cooling is stopped, the temperature of the lean NOx catalyst gradually increases. As s result, until the stored active species is expended, NOx reduction rate momentarily increases from normal characteristic B to transient characteristic C of FIG. 24. After all the active species has been expended, the purification characteristic returns to the normal characteristic B.

In the fifth embodiment, the transient characteristic is repeatedly produced and positively utilized. More particularly, when the engine operating condition detected by the engine operating condition detecting means 3B is determined to be in an idling or deceleration condition by the determining means 4B, the lean NOx catalyst 2B is cooled by the cooling means 5B, for example, by secondary air introduced into the exhaust gas. The reason why the cooling is not executed in other conditions than idling or deceleration condition is that the exhaust gas amount and temperature are great in an acceleration condition and therefore, an effective cooling will not be obtained.

Since an actual vehicle running condition includes repetition of idling, deceleration and acceleration, the cycle of cooling and then stopping the cooling is repeatedly executed. As a result, a great improvement of NOx reduction rate can be seen.

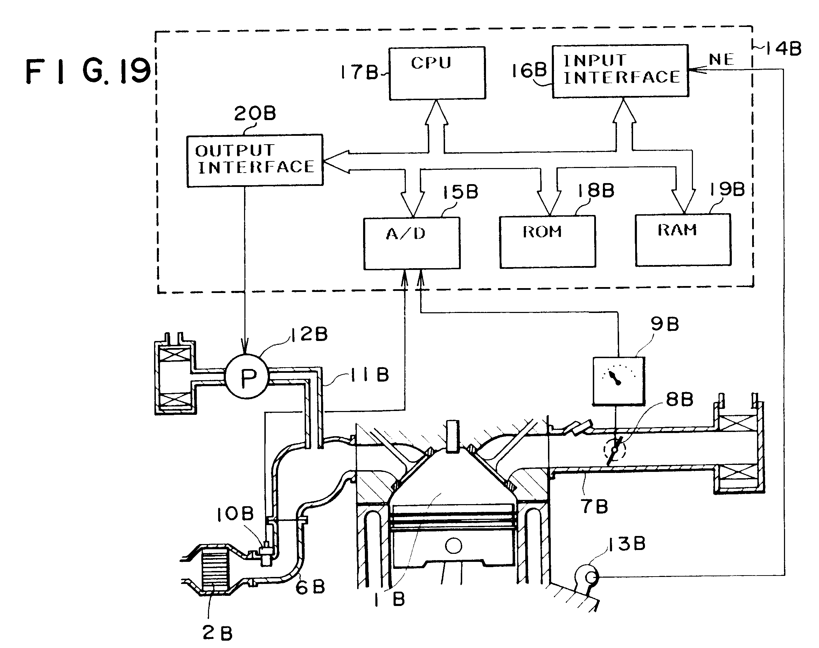

FIG. 19 illustrates in more detail a system of the fifth embodiment. In an exhaust conduit 6B of the engine 1 B, the lean NOx catalyst 2B is installed. In an intake conduit 7B of the engine 1 B, a throttle valve 8 is installed, and a throttle sensor 9B for detecting a throttle opening degree of the valve 8 is coupled to the throttle valve 8. Since the closed condition of the throttle valve 8 may be deemed an idling or deceleration condition, the throttle opening degree signal constitutes a signal for detecting the idling or deceleration condition. Also, an exhaust gas temperature sensor 10B is installed in the exhaust conduit 6B. The throttle sensor 9B and the exhaust gas sensor 10B constitute the engine operating condition detecting means 3B of FIG. 18.

A secondary air supply device 11 B for introducing secondary air into the exhaust gas to cool the lean NOx catalyst 2B is installed in the exhaust conduit 6B. The device 11 B includes an air pump 12B. By controlling the operating period of time of the air pump 12B, the cooling period of time of the lean NOx catalyst 2B can be controlled. The secondary air supply device 11 B including the air pump 12B constitutes one portion of the cooling means 5B of FIG. 18.

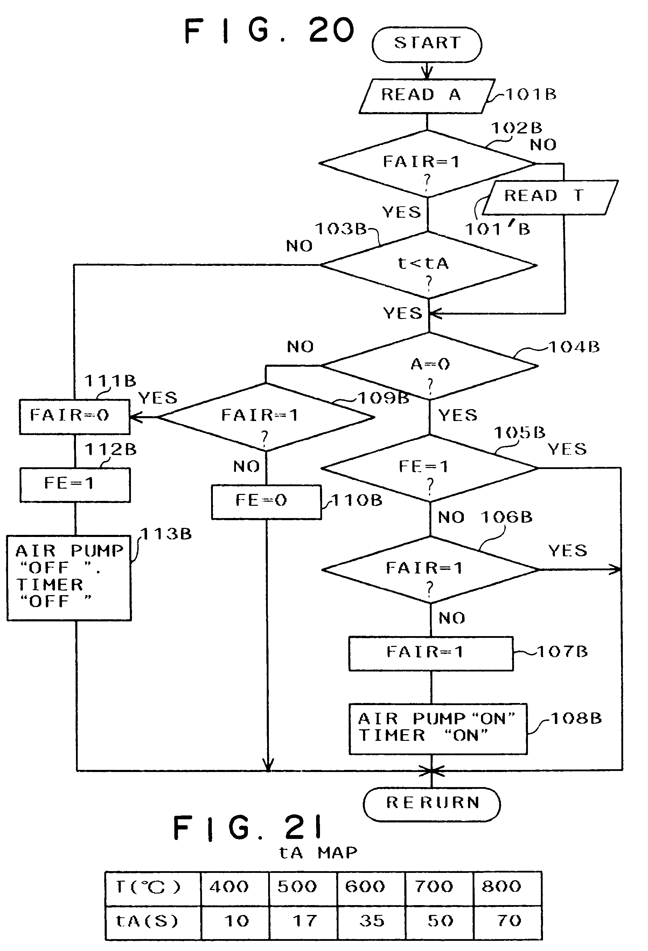

The supply of secondary air is controlled by an engine control computer (hereinafter, ECU) 14B of FIG. 19. ECU 14B includes an A/D converter 15b for converting the analog signals from the throttle sensor 9B and the exhaust gas temperature sensor 10B to digital signals, an input interface 16B for receiving a digital signal from a crank angle sensor 13B, a CPU 17B for executing calculations in accordance with a flow chart of FIG. 20, a ROM 18B for storing the program of FIG. 20 and a map of FIG. 21, a RAM 19B, and an output interface 20B.

FIG. 20 illustrates a routine for controlling the secondary air introduction into the exhaust gas. FIG. 21 is a map illustrating a relationship between the exhaust gas temperature T and a pump operating period of time tA, which is used in the calculation of FIG. 20. In FIG. 20, a reference A illustrates a throttle opening degree, and the condition of "A = 0" corresponds to an idling or deceleration condition. Also, in FIG. 20, a reference t illustrates a timer counting time, a flag FAIR illustrates operation of the air pump, and a flag FE illustrates an air pump operation finish. More particularly, "1" and "0" of the flag FAIR correspond to "operation" and "stop operation" of the air pump, respectively, and " 1 and "0" of the flag FE correspond to "operation finish" and "during operation" of the air pump, respectively.

At every predetermined crank angle, the routine of FIG. 20 is entered. At step 101 B, the throttle opening degree A is read. At the next step 102B, whether flag FAIR is at "1" or not is determined. When the engine operating condition changes to an idle or deceleration condition, since flag FAIR was set to "0" in the previous cycle of calculation, the routine proceeds from step 102B to a step 101'B. At step 101'B, the exhaust gas temperature T is read, and then the routine proceeds to 104B. At step 104B, whether or not flag A is "0", that is, whether or not the throttle valve is closed is determined. In this instance, the step 104B constitutes the determining means 4B of FIG. 18. When the engine operating condition changes to an idling or deceleration condition, since A was set to "0" at step 101 B, reference A is determined to be "0" at step 104B, and the routine proceeds to a step 105B. Since the flag FE was set to "0" in the previous cycle of calculation, the flag FE is determined to be "0" at step 105B, and the routine proceeds to a step 106B. At step 106B, flag FAIR is determined to be "0" and the routine proceeds to a step 107B, where the flag FAIR is set to "1". Then, the routine proceeds to a step 108B, where the air pump 12 is switched on and the timer also is switched on. Due to the control through these steps, when the engine is in an idling or deceleration condition, the air pump 12B begins to operate to cool the lean NOx catalyst 2B, and the timer begins to count. In this instance, the step 108B constitutes one portion of the cooling means 5B of FIG. 18.

At the next cycle of calculation, when the routine proceeds to step 102B, flag FAIR is determined to be "1" because the flag FAIR was set to "1" " at the previous cycle of calculation. Then, the routine proceeds to a step 103B, where it is determined whether or not the timer counting time t has reached a predetermined air pump operating period of time tA, which is determined with respect to the exhaust gas temperature T as shown in FIG. 21. When the period of time t is smaller than the predetermined value tA, the routine proceeds to 104B, 105B, and then 106B. At step 106B, flag FAIR is determined to be "1" because the flag FAIR was set "1" " at the previous cycle of calculation. Therefore, the routine bypasses the steps 107B and 108B and proceeds to the final step where the routine returns to another routine. As a result, the air pump 12B and the timer are maintained "ON", and the cooling is continued.

When the timer operating period of time t finally reaches the predetermined value tA, the routine proceeds from step 103B to a step 111 B. At step 111 B, flag FAIR is set to "0", and then at step 112B, flag FE is set to "1". Then, the routine proceeds to a step 113B, where the air pump 12B is switched off and the timer also is switched off to be cleared. Due to this, the period of time of the cooling is restricted to the period of time tA.

After the air pump operation finishes, that is, after the flag FE was set to "1" " at step 112B at the previous cycle of operation, if the idling or deceleration condition is continued, the routine proceeds through steps 102B, 103B, and 105B to step 105B at the current cycle of calculation. Since flag FE is determined to be "1" at step 105B, the routine proceeds to the final step where the routine returns to another routine. As a result, the air pump and the timer set at step 113B in the previous cycle of calculation are maintained "OFF".

The engine operating condition will change from the idling or deceleration condition to another condition, for example an acceleration condition. Under the acceleration condition, at step 101B, A is read. When the routine proceeds to step 102B, the flag FAIR is determined to be "0" because FAIR was set to "0" in the previous cycle of calculation, and the routine proceeds through a step 101'B to step 104B. Since the throttle opening degree flag A is determined not to be "0" at step 104B, the routine proceeds to step 109B. Since flag FAIR was set to "0" in the previous cycle, the routine proceeds to step 110B where flag FE is set to "0", and then the routine returns. Because this route bypasses the step 108B, the air pump 12B is not switched on.

When an acceleration condition begins before a period of time tA has elapsed after start of the air pump operation, flag FAIR is determined to be "1 at step 109B. At that time, the routine proceeds from step 109B to step 11 B, and then through step 112B to the step 113B where the air pump 12B and the timer are switched off and the cooling of the lean NOx catalyst 2B is stopped at once.

The operation of the fifth embodiment will now be explained. When the engine operating condition changes to an idling or deceleration condition, the air pump 12B is operated to begin cooling of the lean NOx catalyst 2B. The cooling is continued until the engine operating condition changes to another condition or until the predetermined period of time tA of FIG. 21 has elapsed. The period of time tA is determined so as to cool the lean NOx catalyst to a temperature at which the highest NOx purification rate is obtained. More particularly, it is preferable to cool the lean NOx catalyst to about 300 _{°} C. If the catalyst was cooled to 200 _{°} C or 400 °C, the highest purification would not be obtained.

When the lean NOx catalyst 2B is cooled, the direct oxidation of FIG. 16 is suppressed and the partial oxidation is promoted. As a result, the amount of active species produced at the lean NOx catalyst 2B increases and the produced active species is stored in the cells of the lean NOx catalyst 2B. During the cooling, reaction between the active species and NOx is regulated by characteristic D of FIG. 24, and therefore improvement of NOx reduction can not be seen. However, after the cooling is stopped, the temperature of the catalyst gradually increases as it is exposed to the exhaust gas of high temperatures, and the NOx reduction rate is greatly improved at relatively high temperatures as shown by characteristic C of FIG. 24. This increase in the NOx reduction rate continues for a few minutes, and then the characteristic returns to characteristic B of FIG. 24.

In accordance with the fifth embodiment, since the cycle of cooling and temperature rising of the catalyst is repeated, the NOx purification rate is greatly improved as a whole. Further, since the lean NOx catalyst 2B is repeatedly cooled, attachment of coke to the lean NOx catalyst 2B is suppressed, and the durability of the lean NOx catalyst 2B is improved.

### SIXTH AND SEVENTH EMBODIMENTS

An exhaust gas purification system for an internal combustion engine in accordance with any one of the sixth and seventh embodiments generally includes an internal combustion engine capable of executing fuel combustion at lean air-fuel ratios, a lean NOx catalyst which is divided or sectioned into a plurality of portions arranged in parallel with each other, and means for repeatedly producing a catalyst temperature rising condition by alternately cooling the catalyst portions when the temperature of the lean NOx catalyst is relatively high.

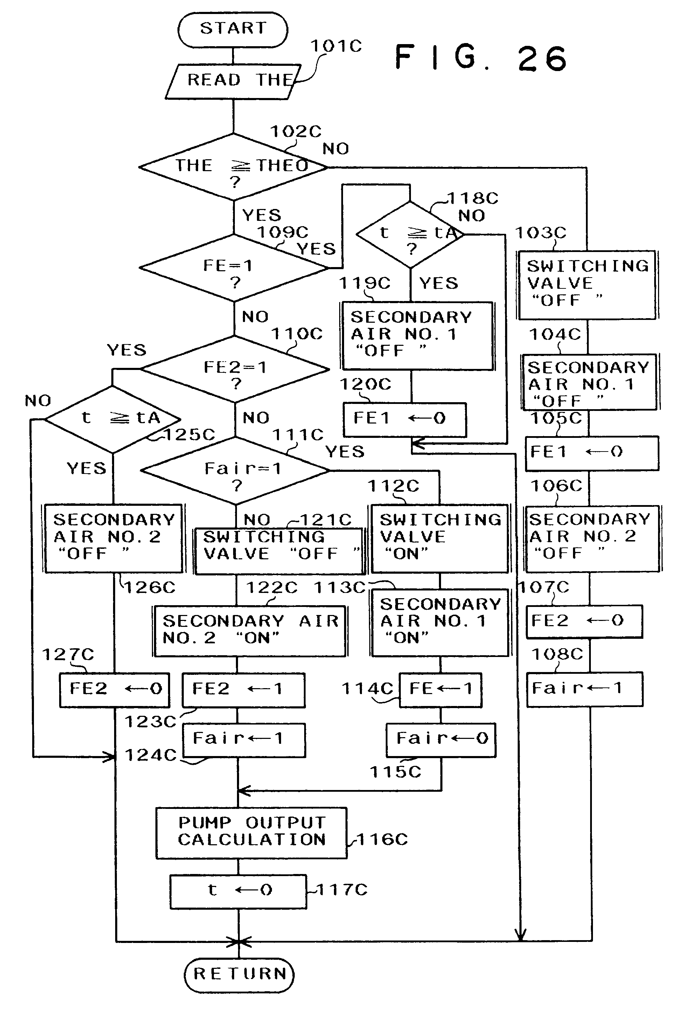

More particularly, FIGS. 25 and 26 illustrate the sixth embodiment. As illustrated in FIG. 25, a plurality of catalytic converter cases are arranged in parallel with each other. A catalyst portion 2C is housed in each catalytic converter case. A plurality of branch conduits each connected to each catalytic converter case join each other at a connecting portion where a switching valve 4C is installed so as to selectively direct the exhaust gas flow to any one of the branch conduits. A plurality of secondary air inlets 6C are provided, and each secondary air inlet is provided in a portion of each branch conduit upstream of the catalyst portion 2C. A secondary air inlet 6C introduces secondary air into one branch conduit when the branch conduit is closed by the switching valve 4C. In the exhaust conduit portion upstream of the switching valve 4C, an exhaust gas temperature sensor 12C is provided. On a downstream side of each lean NOx catalyst 2C, a three-way catalyst 8C may be provided.

FIG. 26 illustrates the control of secondary air supply. Secondary air No. 1 in FIG. 26 corresponds to secondary air introduced into a first branch conduit of FIG. 25 and secondary air No. 2 in FIG. 26 corresponds to secondary air introduced into a second branch conduit of FIG. 25. Further, switching valve 4C "ON" corresponds to a first position of the valve 4C shown by a full line in FIG. 25, and switching valve 4C 'OFF" corresponds to a second position of the valve 4C shown by a broken line in FIG. 25.

In FIG. 26, at step 101 C the exhaust gas temperature THE is read. Then, at the next step 102C, whether or not the exhaust gas temperature is low is determined. When THE is lower than a predetermined temperature THEO (for example, 3000 C), secondary air is not need. Therefore, the routine proceeds to steps 103C through 108C. At step 103C, the switching valve 4C is switched off so that the exhaust gas flows through the catalyst No. 1. Then, at step 104, supply of secondary air No. 1 is stopped, and at step 105C, a flag FE1 which defines supply or non-supply of secondary air No. 1 is set to "0". Similarly, at step 106C, supply of the secondary air No. 2 is stopped, and at step 107C, a flag FE2 which defines supply or non-supply of secondary air No. 2 is set to "0". Then, at step 108C, flag Fair which defines supply or non-supply of secondary air at the next cycle is set to "1", which indicates that the secondary air to be injected in the next cycle is secondary air No. 1.

When THE exceeds THEO for the first time at step 102C, the routine proceeds from step 102X to a step 109C. Then, the routine further proceeds through steps 110C and 111 C to a step 112C, because the flag FE1 was set to "0" at step 105C, the flag FE2 was set to "0" at step 107C, and the flag Fair was set to "1" " at step 108C in the previous cycle of calculation. At step 112C, the catalyst No. 1 is cooled and the switching valve 4C switched to cause the exhaust gas to flow through the catalyst No. 2. Then, at step 113C, the secondary air No. 1 is introduced, and at steps 114C and 115C, flag FE1 is set to "1" and flag Fair is set to "0". Then, the routine proceeds to a step 116C, where a pump output is determined in correspondence to the exhaust gas temperature THE, and at step 117C the timer is cleared.

In the next cycle of calculation, the routine proceeds from step 109C to a step 118C because flag FE1 was set to "1" at step 114C in the previous cycle of calculation. At step 118C, whether or not the timer counting time t reaches or exceeds a predetermined value tA is determined. When t is smaller than tA at step 118C, the current condition is maintained and the routine proceeds to the final, returning step. When t reaches or exceeds tA at step 118C, the routine proceeds to a step 119C, where introduction of secondary air No. 1 is stopped. Then, at the next step 120C, flag FE1 is set to "0".

In the next cycle of calculation, the routine proceeds from step 111 C to a step 121 C, because flag Fair was set to "0" at step 115C in the previous cycle of calculation. At step 121C, the switching valve 4C is switched off to cause the exhaust gas to flow through the catalyst No. 1, and then at step 122C, supply of secondary air No. 2 is switched to "ON". Then, at step 123C, flag FE2 is set to "1", and at step 124C, flag Fair is set to "1".

In the next cycle of calculation, the routine proceeds from step 110C to a step 125C, because flag FE2 was set to "1" " at step 123C in the previous cycle of calculation. At step 125C, until the timer counting time t reaches tA, the routine proceeds to the final, returning step, and when t reaches or exceeds tA, supply of secondary air No. 2 is switched to "OFF", and at the next step 127C, flag FE2 is set to "0".

In this way, catalyst No. 1 and catalyst No. 2 are alternately cooled by secondary air at intervals tA, The secondary air inlets 6C, the secondary air injected through the inlets, and the program steps for alternating injection of the secondary air constitute means which alternately switches the switching valve 4C between the plurality of branch conduits when the exhaust gas temperature is high.

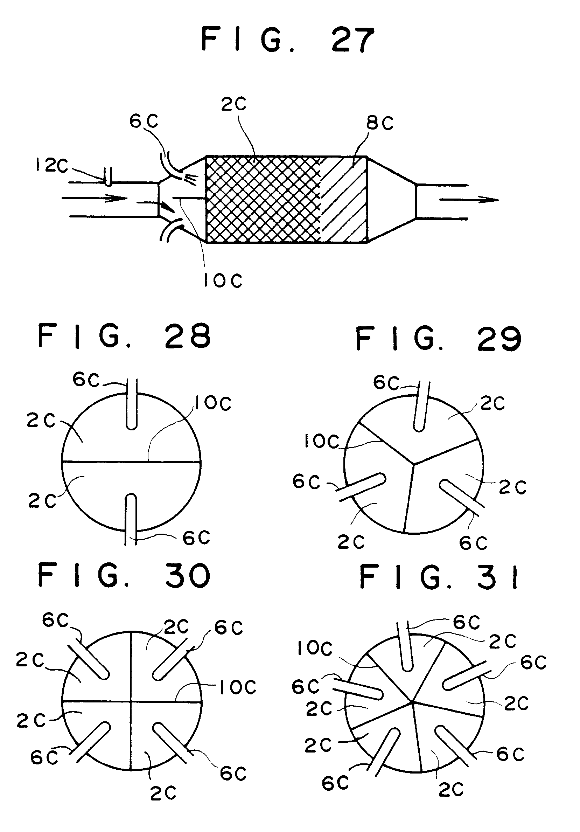

FIGS. 27 through 32 illustrate the seventh embodiment of the invention. In the seventh embodiment, some elements have the same structures as those of the sixth embodiment, and explanation about the elements with the same structures will be omitted by denoting the elements with like reference numerals.

The portions in which the seventh embodiment differs from the sixth embodiment are as follows: The system according to the seventh embodiment includes a single catalytic converter case. The lean NOx catalyst 2C is installed in an intermediate portion of the catalytic converter case. A dividing wall 10C is provided so as to divide an upstream portion of the interior of the catalytic converter case into a plurality of sections so that the sections are in parallel with each other. The dividing wall 10C will section the catalyst because the catalyst is constructed of a monolithic catalyst having axially extending independent cells parallel to each other. A secondary air inlet 6C is provided for each section, but a switching valve corresponding to the valve 4C of the sixth embodiment is not provided. When secondary air is introduced into any one section, the portion of the catalyst located downstream of the one section is cooled. The number of the sections are equal to or greater than two. FIGS. 28 through 31 illustrate the cases where the number of the sections are two, three, four, and five, respectively. The means for repeatedly producing a catalyst temperature rising condition includes means which alternately introduces secondary air through the secondary air inlet 6C when the exhaust gas temperature is high.

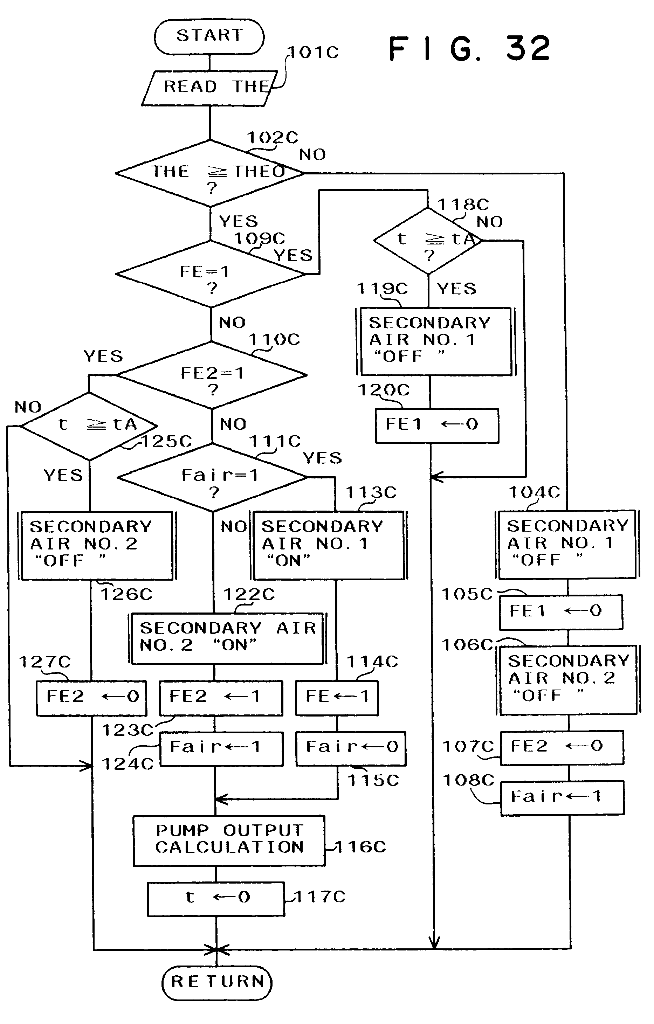

FIG. 32 illustrates a control flow chart for the seventh embodiment which is the same as that of the sixth embodiment except that the steps 103C, 112C and 121 C relating to the switching valve, of the sixth embodiment are deleted from the flow chart of the seventh embodiment. Therefore, explanation about the steps of the seventh embodiment will be omitted by denoting the like steps with like reference numberals.

The operation of the sixth and seventh embodiments will now be explained.

When the exhaust gas temperature is low, direct oxidation of hydrocarbon to carbon dioxide and water is not promoted. Therefore, the lean NOx catalyst 2C is not needed to be cooled, and the secondary air for cooling the catalyst is not supplied.

When the exhaust gas temperature high, the secondary air is alternately supplied and the sections of the lean NOx catalyst are alternately cooled. Due to this alternate cooling, direct oxidation of hydrocarbon in the catalyst section being cooled is suppressed and partial oxidation of hydrocarbon is promoted to produce a great amount of active species in the catalyst section during cooling. When the cooling is switched to another catalyst section, the catalyst section which has been cooled is exposed to the exhaust gas at high temperatures and shows a high NOx reduction rate at least for a few minutes. Since a cycle of cooling and allowing a temperature rise is repeated as shown in FIG. 33, the overall NOx purification rate of the lean NOx catalyst 2C is greatly improved as shown in FIG. 34.

In accordance with any one of the sixth and seventh embodiments, the following effects are obtained.

First, since the lean NOx catalyst sections are alternately cooled when the exhaust gas temperature is high, the NOx purification rate is greatly increased.

Second, since the lean NOx catalyst is repeatedly cooled, the durability of the catalyst will be improved.

Third, since carbon deposited onto the lean NOx catalyst is burned when the secondary air is supplied, decrease of NOx reduction ability of the catalyst due to carbon deposits will be prevented.

### EIGHTH EMBODIMENT

As illustrated in FIG. 35, an exhaust gas purification system for an internal combustion engine in accordance with the eighth embodiment includes an internal combustion engine 1 D capable of executing fuel combustion at lean air-fuel ratios, a lean NOx catalyst 3D installed in an exhaust conduit 2D of the engine, which is divided into a first portion 3D (a first lean NOx catalyst) and a second portion 6D (a second lean NOx catalyst) arranged in series with each other, a bypass conduit 5D bypassing the first lean NOx catalyst 3D, a bypass valve 8D adapted to switch the exhaust gas flow between the first lean NOx catalyst 3D and the bypass conduit 5D, and a means, in the form of bypass valve control means 90, for repeatedly producing a catalyst temperature rising condition by repeatedly executing a cycle of cooling the first lean NOx catalyst 3D and then stopping the cooling to allow the first lean NOx catalyst 3D to rise in temperature. More particularly, the catalyst temperature rising condition repeatedly producing means includes means which alternately switches the bypass valve 8D when the exhaust gas temperature is high.

When the exhaust gas temperature is low, the exhaust gas is caused to flow through the first lean NOx catalyst 3D, and NOx is reduced by the first lean NOx catalyst 3D. Before the exhaust gas that has passed through the first lean NOx catalyst 3D reaches the second lean NOx catalyst 6D, the exhaust gas temperature lowers to a temperature at which the second lean NOx catalyst 6D cannot show a sufficient activity for NOx reduction.

On the other hand, when the exhaust gas temperature is high, the bypass valve 8D is alternately switched at intervals, and therefore, the exhaust gas flows alternately through the first lean NOx catalyst 3D and through the bypass conduit 5D. When the exhaust gas flows through the bypass conduit 5D, the exhaust gas temperature lowers to an appropriate temperature due to natural heat release before the gas reaches the second lean NOx catalyst 6D. As a result, partial oxidation of hydrocarbon is promoted at the second lean NOx catalyst 6D and NOx is purified at the second lean NOx catalyst 6D. When the exhaust gas flows through the bypass conduit 5D, the temperature of the first lean NOx catalyst 3D gradually decreases due to natural heat release. Then, the bypass valve 8D is switched to cause the exhaust gas to flow through the first lean NOx catalyst 3D. Since the first lean NOx catalyst 3D has been cooled to an appropriate temperature, the first lean NOx catalyst 3D can show a high NOx reduction ability before it is heated to a high temperature. When the first lean NOx catalyst 3D rises to a high temperature, the bypass valve 8D switches so that the exhaust gas flows through the bypass conduit 5D. The above-described switching is repeated to obtain a high NOx reduction rate over a wide range of exhaust gas temperature.

The bypass valve control means 9D includes a CPU, a ROM, a RAM, and input/output interfaces. An engine load sensor signal Q/N and an engine speed sensor signal NE are fed to the computer and are stored in the RAM. The ROM stores the bypass valve switching control program, and a sub-routine and map for the program, as shown in FIGS. 36, 37 and 38. The CPU calls out these programs from the ROM and executes the calculation.

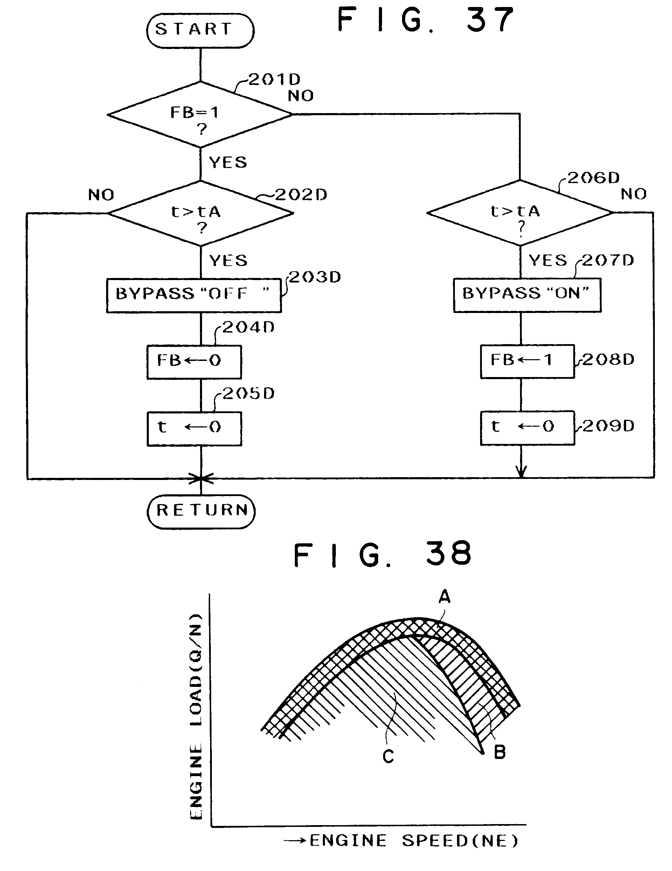

In FIG. 36, inputs of the engine load Q/N and engine speed NE are read at step 101 D. Then, at step 102D, an exhaust gas temperature (or a lean NOx catalyst temperature) TEX and WOT (wide open throttle) flag FW are calculated from the inputs Q/N and NE using the map of FIG. 38. In this instance, the exhaust gas temperature may be directly measured using a temperature sensor. Also, "1" " of the FW flag means that the engine operating condition exists in region A of FIG. 38 and therefore that the current condition is in a range of rich air-fuel ratios, and "0" of the FW flag means that the engine operating condition exists in region B or C or FIG. 38 and therefore that the current condition is in a range of lean air-fuel ratios. Further, region B corresponds to a high temperature range and region C corresponds to a low temperature range.

Then, the routine proceeds to a step 103D, where whether or not the WOT flag FW is "1" " is determined, that is, whether or not the current engine operating condition is in a high power air-fuel ratio range is determined. When FW is "1" at step 103D, the fuel-air ratio is rich and therefore, NOx reduction by the lean NOx catalyst cannot be expected even if the exhaust gas flows through the catalyst. Therefore, in order to prevent degradation of the lean NOx catalyst due to high temperatures, the routine proceeds to a step 107D, where the bypass valve 8D is switched to cause the exhaust gas to flow through the bypass conduit 5D, and further, a bypass flag FB is reset and a timer counting time t is set to 0. In this state, the exhaust gas flows through the bypass conduit 5D to the second lean NOx catalyst 6D. The exhaust gas is purified by the second lean NOx catalyst 6D and then by a three-way catalyst 7D provided downstream of the second lean NOx catalyst 6D.

When FW is determined to be "0" at step 103D, the engine operating condition is in a lean air-fuel ratio range, the routine proceeds to a step 104D, where whether or not the exhaust gas temperature TEX is higher than a predetermined temperature, for example 700 °C, is determined. When TEX is determined to be equal to or lower than 700 °C, the lean NOx catalyst temperature is deemed to be at temperatures where a great amount of active species can be produced, and the routine proceeds to a step 106D. At step 106D, the bypass valve 8D is switched to cause the exhaust gas to flow through the first lean NOx catalyst 3D, and further the bypass flag FB is set and the counter is reset. In this state, the exhaust gas flows through the first lean NOx catalyst 3D where a great amount of active species is produced.

When the exhaust gas temperature TEX is greater than 700 °C at step 104D, the routine proceeds to a step 105D to prevent thermal degradation of the catalyst, because the first lean NOx catalyst 3D cannot reduce NOx above 700 °C. At step 105D, the bypass valve 8D is alternately switched.

FIG. 37 illustrates a sub-routine for alternately switching the bypass valve 8D. At step 201D, whether or not the bypass flag FB is "1" " is determined. In this instance, "1" of flag FB means that the exhaust gas flows through the bypass conduit 5D, and "0" of flag FB means that the exhaust gas flows through the first lean NOx catalyst 3D.

When bypass flag FB is determined to be "1" at step 201 D, the routine proceeds to a step 202D, where whether or not the timer counting time t exceeds a predetermined value tA is determined. When t is determined to exceed tA at step 202D, the routine proceeds to a step 203D where bypass valve 8D is switched to cause the exhaust gas to flow through the first lean NOx catalyst 3D. Then, at step 204D, flag FB is set to "0", and at step 205D, the timer count is cleared.

When the flag FB is determined to be "0" at step 201 D, the routine proceeds to a step 206D, where whether or not the timer counting time t exceeds the predetermined value tA is determined. When t is determined to exceed tA at step 206D, the routine proceeds to a step 207D, where the bypass valve 8D is switched to cause the exhaust gas to flow through the bypass conduit 5D. Then, at step 208D, the bypass flag FB is set to "1", and at step 209D, the timer is cleared. In this way, the bypass valve 8D is alternately switched.

The operation of the eighth embodiment will now be explained. When the exhaust gas temperature is low, the bypass valve 8D is switched to the first lean NOx catalyst side. In this state, the temperature of the first lean NOx catalyst 3D is at a temperature between 300 °C and 500 °C, and the first lean NOx catalyst 3D can show a high Nox reduction rate so that most of NOx is purified by the first lean NOx catalyst 3D.

The condition of high exhaust gas temperature is separated into a first case of high power air-fuel ratios and a second case of low power air-fuel ratios.

When the exhaust gas temperature is high and the fuel-air ratio is not at high power fuel-air ratios, the bypass valve 8D is alternately switched in accordance with the sub-routine of FIG. 37. When the exhaust gas flows through the first lean NOx catalyst 3D, the temperature of the first lean NOx catalyst rises, and when the exhaust gas flows through the bypass conduit 5D, the temperature of first lean NOx catalyst 3D falls due to natural heat release. The NOx reduction rate of the lean NOx catalyst in the temperature rising course is greater than that in the temperature lowering course as discussed with reference to FIG. 10. Since the bypass valve 8D is alternately switched, the temperature rising courses are positively and repeatedly produced in the first lean NOx catalyst 3D to greatly improve the NOx reduction rate of the catalyst.

When the exhaust gas temperature is high and the air-fuel ratio is at high power air-fuel ratios, the first lean NOx catalyst 3D has no longer a NOx reduction ability, because the lean NOx catalyst can show a NOx reduction characteristic only at lean air-fuel ratios. In this state, the bypass valve 8D is switched to cause the exhaust gas to flow through the bypass conduit 5D to the second lean NOx catalyst 6D and the three-way catalyst 7D. Before the exhaust gas reaches the second lean NOx catalyst 6D, the exhaust gas temperature falls to an appropriate temperature. Therefore, the exhaust gas is effectively purified by the second lean NOx catalyst 6D.

In accordance with the eighth embodiment, since the temperature rising courses of the first lean NOx catalyst 3D is positively produced, the NOx purification rate is improved.

### NINTH EMBODIMENT

As shown in FIG. 40, an exhaust gas purification system for an internal combustion engine in accordance with the ninth embodiment of the invention includes an internal combustion engine 1 E capable of executing fuel combustion at lean air-fuel ratios, a lean NOx catalyst 2E located at a position of an exhaust conduit of the engine where the temperature of the lean NOx catalyst 2E rises above the temperature range (Ti -T₂ of FIG. 39) which enables the catalyst to show a high NOx reduction rate under a normal engine operating condition, cooling means for cooling the lean NOx catalyst (for example, secondary air inlet means 3E), catalyst temperature detecting means 4E for detecting the temperature of the lean NOx catalyst 2E, and means for repeatedly producing a catalyst temperature rising condition. More particularly, the means for repeatedly producing a catalyst temperature rising condition includes means 6E which begins cooling of the catalyst 2E by operating the cooling means 3E when the catalyst temperature rises above the temperature T₂ and stops the cooling when the catalyst temperature lowers below the temperature Ti.

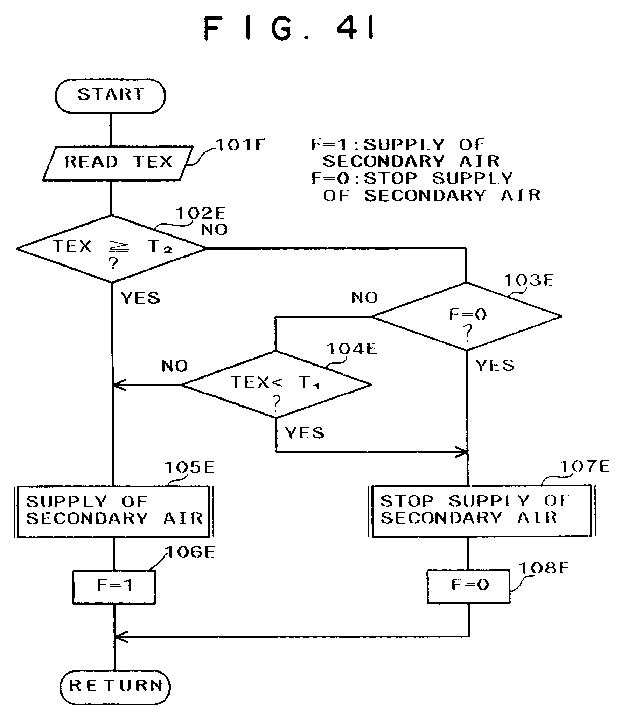

The mean 6E is constituted by an engine control computer which stores a program of FIG. 41, and a CPU of the computer executes calculations in accordance with the program.

In FIG. 41, the catalyst temperature TEX is read at step 101 E. At the next step 102E, whether or not TEX is equal to or greater than T₂ is determined. When TEX is equal to or greater than T₂, the routine proceeds to a step 105E, where secondary air is supplied through the secondary air inlet 3E. Then, at step 106E, a secondary air supply flag F is set to "1". When TEX is lower than T₂ at step 102E, the routine proceeds to a step 103E, where whether or not the flag F is "0" is determined, that is, whether the temperature is in a rising course or in a falling course is determined. When F is "1", the temperature is determined to be in a falling course, because TEX previously exceeded T₂, and flag F was set to "1" at step 106E. The cooling is continued until TEX reaches Ti. When TEX falls below Ti, the routine proceeds to a step 107E, where supply of the secondary air is stopped, and at step 108E, flag F is set to "0". When flag F is determined to be "0", the temperature is in a rising course from engine start, the stopping of the supply of secondary air is continued to cause the catalyst to swiftly rise in temperature.

In accordance with the ninth embodiment, the lean NOx catalyst temperature is controlled to a temperature range between T₁ and T₂, and a cycle of cooling and temperature rising is repeatedly afforded to the lean NOx catalyst. As a result, the NOx purification rate of the lean NOx catalyst is greatly improved.

### TENTH EMBODIMENT

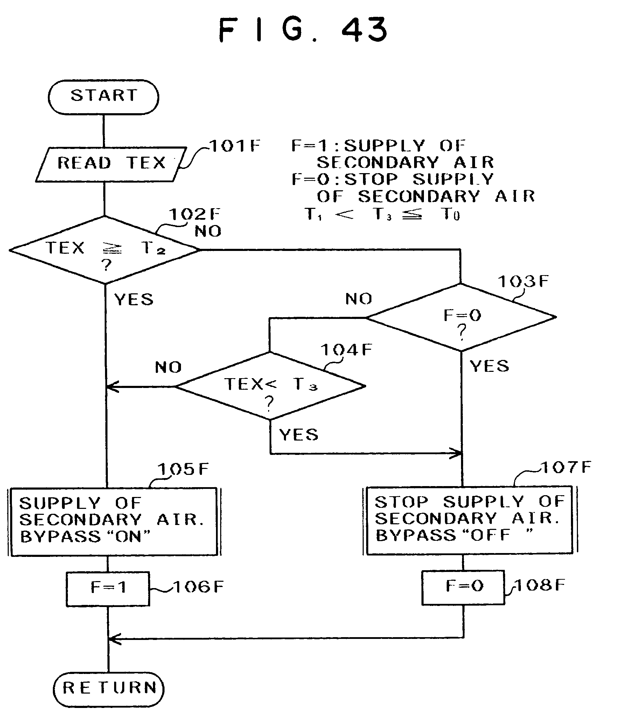

As shown in FIG. 42, an exhaust gas purification system for an internal combustion engine in accordance with the tenth embodiment includes an internal combustion engine 1 F capable of executing fuel combustion at lean air-fuel ratios, a lean NOx catalyst 2F located at a position of an exhaust conduit of the engine where the temperature of the lean NOx catalyst 3F rises to the temperature (To of FIG. 39) which enables the catalyst to show a highest NOx reduction rate under a normal engine operating condition, cooling means for cooling the catalyst (for example, secondary air inlet means 3F), catalyst temperature detecting means 4F for detecting the temperature of the lean NOx catalyst 2F, and means for repeatedly producing a catalyst temperature rising condition. More particularly, the means for repeatedly producing a catalyst temperature rising condition includes means 6F which cools the catalyst 2F by operating the cooling means 3F when the catalyst temperature rises above T₂ and stops the cooling when the catalyst temperature falls below T₃ (Ti is smaller than T₃, and T3 is equal to or smaller than To). The cooling means may include a bypass conduit 8F bypassing the lean NOx catalyst 2F and a bypass valve 7F. When the exhaust gas flows through the bypass conduit 8F, the catalyst temperature falls.

The means 6F is constituted by an engine control computer which stores a program of FIG. 43, and a CPU of the computer executes calculations in accordance with the program.

In FIG. 43, the catalyst temperature TEX is read at step 101 F. At the next step 102F, whether or not TEX is equal to or greater than T₂ of FIG. 39 is determined. When TEX is equal to or greater than T₂, the routine proceeds to a step 105F, where secondary air is supplied through the secondary air inlet 3F. Then, at step 106F, a secondary air supply flag F is set to "1". When TEX is lower than T₂ at step 102F, the routine proceeds to a step 103F, where whether or not flag F is "0" is determined, that is, whether the catalyst is in a temperature rising course or in a temperature falling course is determined. When flag F is "1", the catalyst is determined to be in the temperature falling course. The routine proceeds to a step 104F, and the cooling is continued until TEX reaches T₃. When TEX lowers below T₃, the routine proceeds to a step 107F, where supply of the secondary air is stopped, and at step 108F, flag F is set to "0". When flag F is determined to be "0" at step 103F, the catalyst is in a temperature rising course from engine start, and stopping of the supply of secondary air is continued to cause the catalyst to swiftly rise in temperature.

In accordance with the tenth embodiment, the temperature of the lean NOx catalyst is controlled to To and a cycle of cooling and heating of the catalyst is repeatedly given to the lean NOx catalyst. As a result, the lean NOx purification rate of the lean NOx catalyst is greatly improved.

An exhaust gas purification system for an internal combustion engine includes a catalyst (4, 21A, 2B, 2C, 2D, 2E, 2F) installed in an exhaust conduit of an engine (2, 1 A, 1 B, 1D, 1 E, 1F) and constructed of zeolite carrying at least one kind of metal selected from transition metals and noble metals to reduce nitrogen oxides included in the exhaust gas from the engine under an oxidizing gas condition and in the presence of hydrocarbons. The system further includes means for repeating a cycle of cooling the catalyst (4, 21A, 2B, 2C, 2D, 2E, 2F) and then stopping the cooling to allow the catalyst to rise in temperature so that the temperature rising courses of the catalyst are positively and repeatedly produced. Since the catalyst can show a higher nitrogen oxides reducing ability in the temperature rising course than in the temperature lowering course, the NOx purification rate is greatly improved due to the positive production of the temperature rising courses.

## Claims

1. An exhaust gas purification system comprising:
- an internal combustion engine (2, 1A, 1B, 1D, 1 E, 1F) capable of executing fuel combustion at lean air-fuel ratios, and
- a catalyst (4, 21A, 2B, 2C, 3D, 6D, 2E, 2F) installed in an exhaust conduit of said engine and constructed of zeolite carrying at least one kind of metal selected from transition metals and noble metals to reduce nitrogen oxides included in exhaust gas from the engine under an oxidizing gas condition and in the presence of hydrocarbons,
characterized in that
said exhaust gas purification system furthermore comprises
- means for repeatedly producing a catalyst temperature rising condition for more strongly reducing said nitrogen oxides within a predetermined catalyst temperature range below the excessive limit temperature critical for the purification function of said catalyst, by repeatedly executing a cycle of cooling said catalyst (4, 21A, 2B, 2C, 3D, 6D, 2E, 2F) and then stopping the cooling to allow said catalyst to rise in temperature.

2. The exhaust gas purification system according to claim 1 characterized by
a bypass conduit (6) connected to said exhaust conduit so as to bypass said catalyst (4);
a bypass valve (8) adapted to switch the exhaust gas flown between said catalyst (4) and said bypass conduit (6);
engine operating condition detecting means (10) for detecting an operating condition of said engine (2); and
catalyst temperature detecting means (42) for detecting the temperature of said catalyst (4).

3. The exhaust gas purification system according to claim 2, characterized in that said means for repeatedly producing a catalyst temperature rising condition includes bypass control means (14) which switches on said bypass valve (8) to cause the exhaust gas to flow through said bypass conduit (6) when the exhaust of nitrogen oxides from said engine is small or when the engine operating condition is a condition where purification of nitrogen oxides can not be expected and the catalyst temperature is equal to or higher than a first predetermined temperature, and switches off said bypass valve (8) to cause the exhaust gas to flow through said catalyst (4) when the catalyst temperature is equal to or lower than a second predetermined temperature lower than the first predetermined temperature.

4. The exhaust gas purification system according to claim 2, characterized in that said means for repeatedly producing a catalyst temperature rising condition includes bypass control means (14) which repeats switching on and switching off of said bypass valve (8) at predetermined intervals in a temperature range above a predetermined catalyst temperature.

5. The exhaust gas purification system according to claim 3, characterized in that said first predetermined temperature is 450 _{°} C and said second predetermined temperature is 300 _{°} C.

6. The exhaust gas purification system according to claim 4, characterized in that said predetermined temperature is 300 _{°} C.

7. The exhaust gas purification system according to any of claims 3 and 4, characterized by a three-way catalyst (22) installed in a portion of said exhaust conduit downstream of said nitrogen oxides reducing catalyst (4).

8. The exhaust gas purification system according to claim 1, characterized in that catalyst (21 A) is constructed in the form of pellets, and further comprises:
a catalytic converter case (2A) for housing catalyst pellets (21 A) therein;
a cooling chamber (11A) communicating with said catalytic converter case (2A);
circulating means (12A) for circulating the catalyst pellets between said converter case (2A) and said cooling chamber (11 A); and
circulating velocity control means (23A) for controlling the velocity of the catalyst pellet circulation, wherein said means for repeatedly producing a catalyst temperature rising condition includes said cooling chamber (11 A) and said circulating means (12A).

9. The exhaust gas purification system according to claim 8, characterized in that said circulating means (12A) includes a rotational screw (12bA) driven by a motor (12aA).

10. The exhaust gas purification system according to claim 9, characterized in that said circulating velocity control means (23A) includes a variable resistance installed in an electrical circuit connecting said motor (12aA) and a power source (24A).

11. The exhaust gas purification system according to claim 1, characterized by
engine operating condition detecting means (3B) for detecting an operating condition of said engine (1 B);
engine operating condition determining means (4B) for determining whether or not the detected engine operating condition is in a deceleration or idling condition; and
cooling means (5B) for cooling said catalyst (2B), wherein said means for repeatedly producing a catalyst temperature rising condition includes means which operates said cooling means (5B) to cool said catalyst (2B) when the engine operating condition is determined to be in a deceleration or idling condition by said engine operating condition determining means (4B).

12. The exhaust gas purification system according to claim 1, characterized by
engine operating condition detecting means (3B) for detecting an operating condition of said engine (1 B);
engine operating condition determining means (4B) for determining whether or not the detected engine operating condition is in a deceleration or idling condition; and
secondary air supply means (5B) for introducing secondary air into a portion of the exhaust conduit upstream of said catalyst (2B), wherein said means for repeatedly producing a catalyst temperature rising condition includes means which operates said secondary air supply means (5B) to introduce secondary air into the engine exhaust conduit when the engine operating condition is determined to be in a deceleration or idling condition by said engine operating condition determining means (4B).

13. The exhaust gas purification system according to claim 12, characterized in that said engine operating condition detecting means (3B) includes a throttle sensor (9B) for detecting a throttle valve opening degree.

14. The exhaust gas purification system according to claim 1, characterized by
a plurality of portions into which said catalyst (2C) is divided, the plurality of portions of said catalyst (2C) being arranged in parallel with each other; and
catalyst cooling means (6C) for cooling said catalyst (2C),
wherein the means for repeatedly producing a catalyst temperature, rising condition includes means which operates said catalyst cooling means (6C) to alternately cool the catalyst portions when the exhaust gas temperature is high.

15. The exhaust gas purification system according to claim 1, characterized by
a plurality of catalytic converter cases, said catalyst (2C) being divided into a plurality of portions and a portion of said catalyst being housed in each catalytic converter case;
a plurality of branch conduits each connected to a corresponding catalytic converter case;
a switching valve (4C) installed at a connecting portion of the branch conduits where all the branch conduits join each other so as to selectively direct the exhaust gas flow to any one of the branch conduits;
a plurality of secondary air inlets (6C) each provided in a portion of each branch conduit upstream of the catalytic converter case,
wherein the means for repeatedly producing a catalyst temperature rising condition includes means which alternately switches said switching valve (4C) between the plurality of branch conduits when the exhaust gas temperature is high.

16. The exhaust gas purification system according to claim 1, characterized by
a single catalytic converter case, said catalyst (2C) being installed in an intermediate portion of an internal space of said catalytic converter case;
a dividing wall (10C) dividing a portion of said catalytic converter case internal space upstream of said catalyst (2C) into a plurality of sections so that the sections are in parallel with each other;
a plurality of secondary air inlets (6C) each provided for each section of the upstream portion of said catalytic converter case internal space,
wherein said means for repeatedly producing a catalyst temperature rising condition includes means which alternately introduces secondary air through the secondary air inlet when the exhaust gas temperature is high.

17. The exhaust gas purification system according to any of claims 13 and 14, characterized by a three-way catalyst (8C) provided downstream of said nitrogen oxides reducing catalyst (2C).

18. The exhaust gas purification system according to claim 1, characterized in that said catalyst is divided into a first portion (3D) and a second portion (6D) and further comprising:
a bypass conduit (5D) bypassing the first portion of said catalyst (3D), said second portion (6D) communicating with the bypass conduit (5D);
a bypass valve (8D) adapted to switch the flow of the exhaust gas between said first portion of said catalyst (3D) and said bypass conduit (5D),
wherein said means for repeatedly producing a catalyst temperature rising condition includes means which alternately switches said bypass valve (8D) between said first portion of said catalyst (3D) and said bypass conduit (5D) when the exhaust gas temperature exceeds a predetermined temperature.

19. The exhaust gas purification system according to claim 1, characterized in that said catalyst is divided into a first portion (3D) and a second portion (6D) arranged downstream of the first portion of said catalyst, and further comprising:
a bypass conduit (5D) bypassing the first portion of said catalyst (3D);
a bypass valve (8D) adapted to switch the flow of the exhaust gas between said first portion of said catalyst (3D) and said bypass conduit (5D),
wherein said means for repeatedly producing a catalyst temperature rising condition includes means which alternately switches said bypass valve (8D) between said first portion of said catalyst (3D) and said bypass conduit (5D) when the exhaust gas temperature exceeds a predetermined temperature.

20. The exhaust gas purification system according to claim 19, characterized in that said predetermined temperature is 700 _{°} C.

21. The exhaust gas purification system according to claim 19, characterized by a first three-way catalyst (4D) provided downstream of said first portion of said nitrogen oxides reducing catalyst (3D) and a second three-way catalyst (7D) provided downstream of said second portion of said nitrogen oxides reducing catalyst (6D).

22. The exhaust gas purification system according to claim 1, characterized in that said catalyst (2E) is located at a position of said exhaust conduit where the catalyst temperature tends to rise above a temperature range between temperature T₁ and temperature T₂ at which said catalyst (2E) can show high NOx purification rates under a normal engine operating condition, characterized by
cooling means (3E) for cooling said catalyst;
catalyst temperature detecting means (4E) for detecting the temperature of said catalyst (2E),
wherein said means for repeatedly producing a catalyst temperature rising condition includes means which begins cooling of said catalyst by operating said cooling means when the catalyst temperature detected by said catalyst temperature detecting means rises above the temperature T₂ and stops the cooling when the catalyst temperature detected by said catalyst temperature detecting means falls below the temperature Ti.

23. The exhaust gas purification system according to claim 1, whereby in that said catalyst (2F) is located at a position of said exhaust gas conduit where the catalyst temperature tends to rise to a temperature at which said catalyst (2F) can show the highest NOx purification rate under a normal engine operating condition, characterized by
cooling means (3F) for cooling said catalyst (2F);
catalyst temperature detecting means (4F) for detecting the temperature of said catalyst (2F),
wherein said means for repeatedly producing a catalyst temperature rising condition includes means which begins cooling of said catalyst by operating said cooling means when the catalyst temperature detected by said catalyst temperature detecting means rises above the temperature To and stops the cooling when the catalyst temperature detected by said catalyst temperature detecting means is lowered to a temperature equal to or lower than the temperature To.

24. The exhaust gas purification system according to any of claims 22 and 23, characterized in that said cooling means (3E, 3F) includes secondary air supply means.

25. The exhaust gas purification system according to any of claims 22 and 23, characterized in that said cooling means (3E, 3F) includes a bypass conduit bypassing said catalyst and a bypass valve for switching the exhaust gas flown between said catalyst and said bypass conduit.

26. The exhaust gas purification system according to claim 1, characterized by a predetermined temperature range below 500 _{°} C.

27. The exhaust gas purification system according to claim 26, characterized in that said predetermined temperature range is between 350 _{°} C and 450 _{°} C.

## Patentansprüche

1. Abgas-Reinigungs-System umfassend:
- eine Brennkraftmaschine mit innerer Verbrennung (2, 1A, 1 B, 1D, 1 E, 1 F), die dazu geeignet ist, die Verbrennung von Kraftstoff bei mageren Kraftstoff-Luft-Verhältnissen durchzuführen, und
- einen Katalysator (4, 21A, 2B, 2C, 3D, 6D, 2E, 2F), der in einer Abgasleitung des Motors eingebaut ist und der aus Zeolith aufgebaut ist, der mindestens eine Art von Metall trägt, das aus den Übergangsmetallen und den Edelmetallen ausgewählt ist, um Stickoxyde, die in dem Abgas des Motors enthalten sind, unter oxydierenden Gas-Bedingungen und in der Gegenwart von Kohlenwasserstoffen zu reduzieren,
dadurch gekennzeichnet, daß
das Abgas-Reinigungs-System weiters umfaßt
- Mittel zur wiederholten Erzeugung eines Katalysator-Temperatur-Anstiegs-Zustandes um die Stickoxyde innerhalb eines vorbestimmten Temperaturbereiches des Katalysators unterhalb der oberen Grenztemperatur, die für die Reinigungswirkung des Katalysators kritisch ist, stärker zu reduzieren, durch wiederholte Durchführung eines Zyklus der Kühlung des Katalysators (4, 21A, 2B, 2C, 3D, 6D, 2E, 2F) und dann des Stoppens der Kühlung, um zu ermöglichen, daß die Temperatur des Katalysators ansteigt.

2. Abgas-Reinigungs-System nach Anspruch 1, gekennzeichnet durch
eine Umgehungsleitung (6), die mit der Abgasleitung so verbunden ist, daß sie den Katalysator (4) umgeht;
ein Bypaßventil (8), das dazu ausgebildet ist, die Strömung des Abgases zwischen dem Katalysator (4) und der Bypaßleitung (6) umzuschalten;
ein Motor-Betriebszustand-Erfassungs-Mittel (10) zur Erfassung eines Betriebszustandes des Motors (2); und
ein Katalysator-Temperatur-Erfassungs-Mittel (42) zur Erfassung der Temperatur des Katalysators (4).

3. Abgas-Reinigungs-System nach Anspruch 2, dadurch gekennzeichnet, daß das Mittel zur wiederholten Erzeugung eines Katalysator-Temperatur-Anstiegs-Zustandes ein Bypaß-Steuer-Mittel (14) umfaßt, das das Bypaßventil (8) einschaltet, um zu bewirken, daß das Abgas durch die Umgehungsleitung (6) strömt, wenn der Ausstoß von Stickoxyden aus dem Motor klein ist oder wenn der Motor-Betriebszustand ein Zustand ist, in dem die Reinigung der Stickoxyde nicht erwartet werden kann und die Temperatur des Katalysators gleich oder größer als eine erste vorbestimmte Temperatur ist, und das das Bypaßventil (8) ausschaltet, um zu bewirken, daß das Abgas durch den Katalysator (4) strömt, wenn die Temperatur des Katalysators gleich oder kleiner als eine zweite vorbestimmte Temperatur ist, die kleiner ist als die erste vorbestimmte Temperatur.

4. Abgas-Reinigungs-System nach Anspruch 2, dadurch gekennzeichnet, daß das Mittel zur wiederholten Erzeugung eines Katalysator-Temperatur-Anstiegs-Zustandes ein Bypaß-Steuer-Mittel (14) umfaßt, das das Einschalten und Ausschalten des Bypaßventils (8) in vorbestimmten Zeitabständen in einem Temperaturbereich oberhalb einer vorbestimmten Temperatur des Katalysators wiederholt.

5. Abgas-Reinigungs-System nach Anspruch 3, dadurch gekennzeichnet, daß die erste vorbestimmte Temperatur 450 °C ist und daß die zweite vorbestimmte Temperatur 300 _{°} C ist.

6. Abgas-Reinigungs-System nach Anspruch 4, dadurch gekennzeichnet, daß die vorbestimmte Temperatur 300 _{°} C ist.

7. Abgas-Reinigungs-System nach einem der Ansprüche 3 oder 4, gekennzeichnet durch einen Dreiweg-Katalysator (22), der in einem Abschnitt der Abgasleitung stromabwärts des die Stickoxyde reduzierenden Katalysators (4) eingebaut ist.

8. Abgas-Reinigungs-System nach Anspruch 1, dadurch gekennzeichnet, daß der Katalysator (21A) in Form von Pellets aufgebaut ist, und daß es weiters umfaßt:
ein Katalysator-Konverter-Gehäuse (2A), um die Katalysator-Pellets (21A) darin aufzunehmen;
eine Kühl-Kammer (11A), die mit dem Katalysator-Konverter-Gehäuse (2A) in Verbindung steht;
ein Zirkulations-Mittel (12A), um die Katalysator-Pellets zwischen dem Konverter-Gehäuse (2A) und der Kühl-Kammer (11A) im Kreis zu führen; und
ein Zirkulations-Geschwindigkeits-SteuerMittel (23A) zur Steuerung der Geschwindigkeit der Zirkulation der Katalysator-Pellets, wobei das Mittel zur wiederholten Erzeugung eines Katalysator-Temperatur-Anstiegs-Zustandes die Kühl-Kammer (11A) und das Zirkulations-Mittel (12A) umfaßt.

9. Abgas-Reinigungs-System nach Anspruch 8, dadurch gekennzeichnet, daß das Zirkulations-Mittel (12A) eine drehbare Schraube (12bA) umfaßt, die von einem Motor (12aA) angetrieben wird.

10. Abgas-Reinigungs-System nach Anspruch 9, dadurch gekennzeichnet, daß das Zirkulations-Geschwindigkeits-Steuer-Mittel (23A) einen veränderlichen Widerstand umfaßt, der in einer elektrischen Schaltung eingebaut ist, die den Motor (12aA) und eine Energiequelle (24A) miteinander verbindet.

11. Abgas-Reinigungs-System nach Anspruch 1, gekennzeichnet durch
ein Motor-Betriebszustand-Erfassungs-Mittel (3B) zur Erfassung eines Betriebszustandes des Motors (1 B);
ein Motor-Betriebszustand-Erfassungs-Mittel (4B) zur Bestimmung, ob der erfaßte Motor-Betriebszustand in einem Verzögerungs- oder Leerlauf-Zustand ist oder nicht; und
ein Kühl-Mittel (5B) zur Kühlung des Katalysators (2B), wobei das Mittel zur wiederholten Erzeugung eines Katalysator-Temperatur-Anstiegs-Zustandes ein Mittel umfaßt, das das Kühl-Mittel (5B) betätigt, um den Katalysator (2B) zu kühlen, wenn durch das Motor-Betriebszustand-Erfassungs-Mittel (4B) bestimmt wird, daß der Motor-Betriebszustand in einem Verzögerungs- oder Leerlaufzustand ist.

12. Abgas-Reinigungs-System nach Anspruch 1, gekennzeichnet durch
Motor-Betriebszustand-Erfassungs-Mittel (3B) zur Erfassung eines Betriebszustandes des Motors (1 B);
Motor-Betriebszustand-Erfassungs-Mittel (4B) zur Bestimmung, ob sich der erfaßte Betriebszustand des Motors in einem Verzögerungs- oder Leerlaufzustand befindet; und
Sekundärluft-Zufuhr-Mittel (5B) zum Einführen von Sekundärluft in einem Abschnitt der Abgas-Leitung stromaufwärts des Katalysators (2B),
wobei das Mittel zur wiederholten Erzeugung eines Katalysator-Temperatur-Anstiegs-Zustandes ein Mittel umfaßt, das das Sekundärluft-Zufuhr-Mittel (5B) betätigt, um Sekundärluft in die Abgasleitung des Motors einzuführen, wenn durch das Motor-Betriebszustand-Erfassungs-Mittel (4B) bestimmt wird, daß der Betriebszustand des Motors in einem Verzögerungs- oder Leerlaufzustand ist.

13. Abgas-Reinigungs-System nach Anspruch 12, dadurch gekennzeichnet, daß das Motor-Betriebszustand-Erfassungs-Mittel (3B) einen Drosselklappen-Sensor (9B) zur Erfassung eines Grades der Öffnung der Drosselklappe umfaßt.

14. Abgas-Reinigungs-System nach Anspruch 1, gekennzeichnet durch
eine Mehrzahl von Abschnitten, in die der Katalysator (2C) unterteilt ist, wobei die Mehrzahl der Abschnitte des Katalysators (2C) parallel zueinander angeordnet ist; und
Katalysator-Kühl-Mittel (6C) zur Kühlung des Katalysators (2C),
wobei das Mittel zur wiederholten Erzeugung eines Katalysator-Temperatur-Anstiegs-Zustandes ein Mittel umfaßt, das das Katalysator-Kühl-Mittel (6C) betätigt, um die Katalysator-Abschnitte abwechselnd zu kühlen, wenn die Abgastemperatur groß ist.

15. Abgas-Reinigungs-System nach Anspruch 1, gekennzeichnet durch
eine Mehrzahl von Katalysator-Konverter-Gehäusen, wobei der Katalysator (2C) in eine Mehrzahl von Abschnitte unterteilt ist und in jedem Katalysator-Konverter-Gehäuse ein Abschnitt des Katalysators aufgenommen ist;
eine Mehrzahl von Zweigleitungen, die jeweils mit einem entsprechenden Katalysator-Konverter-Gehäuse verbunden sind;
ein Schaltventil (4C), das an einem Verbindungsabschnitt der Zweigleitungen eingebaut ist, in den alle Zweigleitungen münden, um so die Strömung des Abgases wahlweise in eine der Zweigleitungen zu leiten;
eine Mehrzahl von Sekundärluft-Einlässen (6C), die jeweils in einem Abschnitt jeder Zweigleitung stromaufwärts des Katalysator-Konverter-Gehäuses vorgesehen sind,
wobei das Mittel zur wiederholten Erzeugung eines Katalysator-Temperatur-Anstiegs-Zustandes ein Mittel umfaßt, das das Schaltventil (4C) abwechselnd zwischen der Mehrzahl der Zweigleitungen schaltet, wenn die Temperatur des Abgases groß ist.

16. Abgas-Reinigungs-System nach Anspruch 1, gekennzeichnet durch
ein einzelnes Katalysator-Konverter-Gehäuse, wobei der Katalysator (2C) in einem mittleren Abschnitt eines Innenraumes des Katalysator-Konverter-Gehäuses angeordnet ist;
eine Trennwand (10C), die einen Abschnitt des Innenraums des Katalysator-Konverter-Gehäuses stromaufwärts des Katalysators (2C) in eine Mehrzahl von Abschnitte unterteilt, so daß die Abschnitte parallel zueinander sind;
eine Mehrzahl von Sekundärluft-Einlässen (6C), die jeweils für jeden Abschnitt des stromaufwärtigen Abschnittes des Innenraums des Katalysator-Konverter-Gehäuses vorgesehen sind,
wobei das Mittel zur wiederholten Erzeugung eines Katalysator-Temperatur-Anstiegs-Zustandes ein Mittel umfaßt, das abwechselnd Sekundärluft durch den Sekundärluft-Einlaß einführt, wenn die Temperatur des Abgases groß ist.

17. Abgas-Reinigungs-System nach einem der Ansprüche 13 oder 14, gekennzeichnet durch einen Dreiweg-Katalysator (3C), der stromabwärts des die Stickoxyde reduzierenden Katalysators (2C) vorgesehen ist.

18. Abgas-Reinigungs-System nach Anspruch 1, dadurch gekennzeichnet, daß der Katalysator in einen ersten Abschnitt (3D) und einen zweiten Abschnitt (6D) unterteilt ist, weiters umfassend:
eine Umgehungsleitung (5D), die den ersten Abschnitt des Katalysators (3D) umgeht, wobei der zweite Abschnitt (6D) mit der Umgehungsleitung (5D) in Verbindung steht;
ein Bypaßventil (8D), das dazu ausgebildet ist, die Strömung des Abgases zwischen dem ersten Abschnitt des Katalysators (3D) und der Umgehungsleitung (5D) umzuschalten,
wobei das Mittel zur wiederholten Erzeugung eines Katalysator-Temperatur-Anstiegs-Zustandes ein Mittel umfaßt, das das Bypaßventil (8D) abwechselnd zwischen dem ersten Abschnitt des Katalysators (3D) und der Umgehungsleitung (5D) umschaltet, wenn die Temperatur des Abgases eine vorbestimmte Temperatur übersteigt.

19. Abgas-Reinigungs-System nach Anspruch 1, dadurch gekennzeichnet, daß der Katalysator in einen ersten Abschnitt (3D) und einen zweiten Abschnitt (6D) unterteilt ist, der stromabwärts des ersten Abschnittes des Katalysators angeordnet ist, weiters umfassend:
eine Umgehungsleitung (5D), die den ersten Abschnitt des Katalysators (3D) umgeht;
ein Bypaßventil (8D), das dazu ausgebildet ist, die Strömung des Abgases zwischen dem ersten Abschnitt des Katalysators (3D) und der Umgehungsleitung (5D) umzuschalten,
wobei das Mittel zur wiederholten Erzeugung eines Katalysator-Temperatur-Anstiegs-Zustandes ein Mittel umfaßt, das das Bypaßventil (8D) abwechselnd zwischen dem ersten Abschnitt des Katalysators (3D) und der Umgehungsleitung (5D) umschaltet, wenn die Temperatur des Abgases eine vorbestimmte Temperatur übersteigt.

20. Abgas-Reinigungs-System nach Anspruch 19, dadurch gekennzeichnet, daß die vorbestimmte Temperatur 700 _{°} C ist.

21. Abgas-Reinigungs-System nach Anspruch 19, dadurch gekennzeichnet, daß ein erster Dreiweg-Katalysator (4D) stromabwärts des ersten Abschnittes des die Stickoxyde reduzierenden Katalysators (3D) vorgesehen ist und daß ein zweiter Dreiweg-Katalysator (7D) stromabwärts des zweiten Abschnittes des die Stickoxyde reduzierenden Katalysators (6D) vorgesehen ist.

22. Abgas-Reinigungs-System nach Anspruch 1, dadurch gekennzeichnet, daß der Katalysator (2E) an einer Stelle der Abgasleitung angeordnet ist, an der die Temperatur des Katalysators dazu neigt, über einen Temperaturbereich zwischen der Temperatur T₁ und der Temperatur T₂ anzusteigen, in dem der Katalysator (2E) große NOx-Reinigungs-Raten bei einem normalen Betriebszustand des Motors zeigen kann, gekennzeichnet durch
ein Kühl-Mittel (3E) zur Kühlung des Katalysators;
ein Katalysator-Temperatur-Erfassungs-Mittel (4E) zur Erfassung der Temperatur des Katalysators (2E),
wobei das Mittel zur wiederholten Erzeugung eines Katalysator-Temperatur-Anstiegs-Zustandes ein Mittel erfaßt, das die Kühlung des Katalysators beginnt, indem es das Kühl-Mittel betätigt, wenn die von dem Katalysator-Temperatur-Erfassungs-Mittel erfaßte Temperatur des Katalysators über die Temperatur T₂ ansteigt, und das die Kühlung stoppt, wenn die Temperatur des Katalysators, die von dem Katalysator-Temperatur-Erfassungs-Mittel erfaßt wird, unter die Temperatur T₁ abfällt.

23. Abgas-Reinigungs-System nach Anspruch 1, wobei der Katalysator (2F) an einer Stelle der Abgasleitung angeordnet ist, an der die Temperatur des Katalysators dazu neigt, auf eine Temperatur anzusteigen, an der der Katalysator (2F) die größte NOx-Reinigungs-Rate bei einem normalen Betriebszustand des Motors zeigen kann, gekennzeichnet durch
ein Kühl-Mittel (3F) zur Kühlung des Katalysators (2F);
ein Katalysator-Temperatur-Erfassungs-Mittel (4F) zur Erfassung der Temperatur des Katalysators (2F),
wobei das Mittel zur wiederholten Erzeugung eines Katalysator-Temperatur-Anstiegs-Zustandes ein Mittel umfaßt, das die Kühlung des Katalysators beginnt, indem es das Kühl-Mittel betätigt, wenn die von dem Katalysator-Temperatur-Erfassungs-Mittel erfaßte Temperatur des Katalysators über die Temperatur Tₒ ansteigt, und das die Kühlung stoppt, wenn die Temperatur des Katalysators, die von dem Katalysator-Temperatur-Erfassungs-Mittel erfaßt wird, auf eine Temperatur abgesenkt wird, die gleich oder kleiner als die Temperatur To ist.

24. Abgas-Reinigungs-System nach einem der Ansprüche 22 oder 23, dadurch gekennzeichnet, daß das Kühl-Mittel (3E, 3F) ein Sekundärluft-Zufuhr-Mittel umfaßt.

25. Abgas-Reinigungs-System nach einem der Ansprüche 22 oder 23, dadurch gekennzeichnet, daß das Kühl-Mittel (3E, 3F) eine Umgehungsleitung umfaßt, die den Katalysator umgeht, sowie ein Bypaßventil, um den Strom des Abgases zwischen dem Katalysator und der Umgehungsleitung umzuschalten.

26. Abgas-Reinigungs-System nach Anspruch 1, gekennzeichnet durch einen vorbestimmten Temperaturbereich unterhalb von 500 _{°} C.

27. Abgas-Reinigungs-System nach Anspruch 26, dadurch gekennzeichnet, daß der vorbestimmte Temperaturbereich zwischen 350 °C und 450 _{°} C liegt.

## Revendications

1. Un système d'épuration de gaz d'échappement comprenant:
- un moteur à combustion interne (2, 1A, 1 B, 1 D, 1 E, 1 F) capable de réaliser la combustion du carburant pour des rapports air-carburant en mélange pauvre; et
- un catalyseur (4, 21A, 2B, 2C, 3D, 6D, 2E, 2F) installé dans un conduit d'échappement dudit moteur et réalisé en zéolite comportant au moins un type de métal sélectionné parmi les métaux de transition et les métaux nobles pour réduire les oxydes d'azote inclus dans les gaz d'échappement en provenance du moteur dans un état de gaz oxydant et en présence d'hydrocarbures,
caractérisé en ce que:
ledit système d'épuration de gaz d'échappement comporte en outre:
- des moyens pour produire de façon répétitive un état d'augmentation de température du catalyseur pour réduire plus fortement lesdits oxydes d'azote dans une gamme prédéterminée de température de catalyseur inférieure à la température limite excessive critique pour la fonction d'épuration dudit catalyseur, en réalisant de façon répétée un cycle de refroidissement dudit catalyseur (4, 21A, 2B, 2C, 3D, 6D, 2E, 2F) et en arrêtant ensuite le refroidissement pour permettre audit catalyseur de monter en température.

2. Le système d'épuration de gaz d'échappement selon la revendication 1, caractérisé par:
- un conduit de dérivation (6) relié audit conduit d'échappement de façon à réaliser une dérivation dudit catalyseur (4);
- une valve de dérivation (8) apte à commuter le gaz d'échappement qui s'écoule entre ledit catalyseur (4) et ledit conduit de dérivation (6);
- des moyens de détection d'état de fonctionnement du moteur (10) pour détecter un état de fonctionnement dudit moteur (2); et
- des moyens de mesure de température de catalyseur (42) pour mesurer la température dudit catalyseur (4).

3. Le système d'épuration de gaz d'échappement selon la revendication 2, caractérisé en ce que lesdits moyens pour provoquer de façon répétitive un état d'augmentation de température du catalyseur comportent des moyens de commande de dérivation (14) qui commutent sur ladite valve de dérivation (8) pour obliger les gaz d'échappement s'écoulant à travers ledit conduit de dérivation (6) lorsque la quantité d'oxyde d'azote dans l'échappement en provenance dudit moteur ou lorsque l'état de fonctionnement du moteur est un état dans lequel on ne peut pas espérer réaliser l'épuration des oxydes d'azote, et lorsque la température du catalyseur est égale à ou supérieure à une première température prédéterminée, et commute en retour ladite valve de dérivation (8) pour obliger les gaz d'échappement s'écoulant à travers ledit catalyseur (4) lorsque la température du catalyseur est égale ou inférieure à une seconde température prédéterminée, inférieure à la première température prédéterminée.

4. Le système d'épuration de gaz d'échappement selon la revendication 2, caractérisé en ce que lesdits moyens pour réaliser de façon répétitive un état d'augmentation de température de catalyseur comportent des moyens de commande de dérivation (14) qui répètent la commutation de mise en service et de mise hors service de ladite valve de dérivation (8) à des intervalles prédéterminés dans une gamme de température supérieure à une température de catalyseur prédéterminée.

5. Le système d'épuration de gaz d'échappement selon la revendication 3, caractérisé en ce que ladite première température prédéterminée est de 450 _{°} C et ladite seconde température prédéterminée est de 300 _{°} C.

6. Le système d'épuration de gaz d'échappement selon la revendication 4, caractérisé en ce que ladite température prédéterminée est de 300 _{°} C.

7. Le système d'épuration de gaz d'échappement selon l'une quelconque des revendications 3 et 4, caractérisé par un catalyseur à trois voies (22) installé dans une partie dudit conduit d'échappement en aval dudit catalyseur (4) de réduction des oxydes d'azote.

8. Le système d'épuration de gaz d'échappement selon la revendication 1, caractérisé en ce que le catalyseur (21A) est réalisé sous la forme de pastilles, et comporte en outre:
- un boîtier de conversion catalytique (2A) pour recevoir à l'intérieur les pastilles de catalyseur (21 A);
- une chambre de refroidissement (11 A) communiquant avec ledit boîtier de convertisseur catalytique (2A);
- des moyens de circulation (12A) pour faire circuler les pastilles de catalyseur entre lesdits boîtiers de conversion (2A) et la chambre de refroidissement (11A); et
- des moyens de commande de vitesse de circulation (23A) pour commander la vitesse de circulation des pastilles de catalyseur dans lesquels lesdits moyens pour produire de façon répétitive un état d'augmentation de température du catalyseur comportent ladite chambre de refroidissement (11A) et lesdits moyens de circulation (12A).

9. Le système d'épuration de gaz d'échappement selon la revendication 8, caractérisé en ce que lesdits moyens de circulation (12A) comportent une vis rotative (12bA) entraînée par un moteur (12aA).

10. Le système d'épuration de gaz d'échappement selon la revendication 9, caractérisé en ce que lesdits moyens de commande de vitesse de circulation (23A) comportent une résistance variable installée dans un circuit électrique reliant ledit moteur (12aA) et une source de puissance (24A).

11. Le système d'épuration de gaz d'échappement selon la revendication 1, caractérisé par:
- des moyens de détection d'état de fonctionnement de moteur (3B) pour détecter un état de fonctionnement dudit moteur (1 B);
- des moyens de détermination d'état de fonctionnement de moteur (4B) pour déterminer si l'état de fonctionnement de moteur détecté est ou non un état de décélération ou de marche au ralenti; et
- des moyens de refroidissement (5B) pour refroidir ledit catalyseur (2B), dans lequel lesdits moyens pour produire de façon répétitive un état d'augmentation de température de catalyseur comportent des moyens qui font fonctionner lesdits moyens de refroidissement (5B) pour refroidir ledit catalyseur (2B) lorsque l'on a déterminé que l'état de fonctionnement du moteur est dans un état de décélération ou de marche au ralenti à l'aide desdits moyens de détermination d'état de fonctionnement de moteur (4B).

12. Le système d'épuration de gaz d'échappement selon la revendication 1, caractérisé par:
- des moyens de détection d'état de fonctionnement du moteur (3B) pour détecter un état de fonctionnement dudit moteur (1 B);
- des moyens de détermination de l'état de fonctionnement de moteur (4B) pour déterminer si l'état de fonctionnement détecté du moteur est ou non un état de décélération ou de marche au ralenti; et
- des moyens de fourniture d'air secondaire (5B) pour introduire de l'air secondaire dans une partie du conduit d'échappement en amont dudit catalyseur (2B);
dans lequel lesdits moyens pour produire de façon répétitive un état d'augmentation de température de catalyseur comporte des moyens qui mettent en oeuvre lesdits moyens de fourniture d'air secondaire (5B) pour introduire de l'air secondaire dans le conduit d'échappement de moteur lorsque l'on a déterminé que l'état de fonctionnement du moteur est un état de décélération ou de marche au ralenti à l'aide desdits moyens de détermination d'état de fonctionnement de moteur (4B).

13. Le système d'épuration de gaz d'échappement selon la revendication 12, caractérisé en ce que lesdits moyens de détection d'état de fonctionnement de moteur (3B) comportent un capteur de papillon des gaz (9B) pour détecter le degré d'ouverture du papillon des gaz.

14. Le système d'épuration de gaz d'échappement selon la revendication 1, caractérisé par:
- une pluralité de parties dans lesquelles ledit catalyseur (2C) est divisé, la pluralité de parties dudit catalyseur (2C) étant disposées en parallèle les unes par rapport aux autres; et
- des moyens de refroidissement de catalyseur (6C) pour refroidir ledit catalyseur (2C),
dans lequel les moyens pour produire de façon répétitive un état d'augmentation de température de catalyseur, comportent des moyens qui font fonctionner lesdits moyens de refroidissement de catalyseur (6C) pour refroidir alternativement les parties de catalyseur lorsque la température de gaz d'échappement est élevée.

15. Le système d'épuration de gaz d'échappement selon la revendication 1, caractérisé par:
- une pluralité de boîtiers de convertisseurs catalytiques, ledit catalyseur (2C) étant divisé en une pluralité de parties et une partie dudit catalyseur étant logée dans chaque boîtier de convertisseur catalytique;
- une pluralité de conduits de branchement reliés chacun à un boîtier de convertisseur catalytique correspondant;
- une valve de commutation (4C) installée dans une partie de liaison des conduits de branchement là où tous les conduits de branchement se rejoignent les uns les autres de façon à diriger sélectivement l'écoulement du gaz d'échappement vers l'un quelconque des conduits de branchement;
- par une pluralité d'entrées d'air secondaire (6C) prévues chacune dans une partie de chacun des conduits de branchement en amont du boîtier de convertisseur catalytique,
dans lequel les moyens pour produire de façon répétitive un état d'augmentation de température de catalyseur comportent des moyens qui commutent alternativement ladite valve de commutation ( 4C) entre la pluralité de conduits de branchement lorsque la température des gaz d'échappement est élevée.

16. Le système d'épuration de gaz d'échappement selon la revendication 1, caractérisé par:
- un boîtier unique de convertisseur catalytique, ledit catalyseur (2C) étant installé dans une partie intermédiaire d'un espace interne dudit boîtier de convertisseur catalytique;
- une paroi de division (10C) divisant une partie dudit espace intérieur de boîtier de convertisseur catalytique en amont dudit catalyseur (2C) en une pluralité de sections, de telle façon que ces sections soient montées en parallèle les unes aux autres;
- une pluralité d'entrées d'air secondaires (6C) prévues chacune pour chaque section de la partie amont dudit espace intérieur de boîtier de convertisseur catalytique,
dans lequel lesdits moyens pour produire de façon répétitive un état d'augmentation de température de catalyseur comporte des moyens qui introduisent de façon alternée de l'air secondaire dans l'entrée d'air secondaire, lorsque la température de gaz d'échappement est élevée.

17. Le système d'épuration de gaz d'échappement selon l'une quelconque des revendications 13 et 14, caractérisé par un catalyseur à trois voies (8C) prévu en aval dudit catalyseur (2C) de réduction des oxydes d'azote.

18. Le système d'épuration de gaz d'échappement selon la revendication 1, caractérisé en ce que ledit catalyseur est divisé en une première partie (3D) et en une seconde partie (6D) et comporte en outre:
- un conduit de dérivation (5D) monté en dérivation de la première partie dudit catalyseur (3D), ladite seconde partie (6D) communiquant avec le conduit de dérivation (5D);
- une valve de dérivation (8D) susceptible de commuter l'écoulement des gaz d'échappement entre ladite première partie dudit catalyseur (3D) et ledit conduit de dérivation (5D),
dans lequel lesdits moyens pour produire de façon répétitive un état d'augmentation de température du catalyseur comportent des moyens qui commutent alternativement ladite valve de commutation (8D) entre ladite première partie dudit catalyseur (3D) et ledit conduit de dérivation (5D) lorsque la température des gaz d'échappement dépasse une température prédéterminée.

19. Le système d'épuration de gaz d'échappement selon la revendication 1, caractérisé en ce que ledit catalyseur est divisé en une première partie (3D) et en une seconde partie (6D) disposées en aval de la première partie du catalyseur et comprenant en outre:
- un conduit de dérivation (5D) monté en dérivation de la première partie dudit catalyseur (3D);
- une valve de dérivation (8D) susceptible de commuter l'écoulement des gaz d'échappement entre ladite première partie dudit catalyseur (3D) et ledit conduit de dérivation (5D),
dans lequel lesdits moyens pour produire de façon répétitive un état d'augmentation de température de catalyseur comportent des moyens qui commutent alternativement ladite valve de commutation (8D) entre ladite première partie dudit catalyseur (3D) et ledit conduit de dérivation (5D) lorsque la température des gaz d'échappement dépasse une température prédéterminée.

20. Le système dépuration de gaz d'échappement selon la revendication 9, caractérisé en ce que ladite température prédéterminée est 700 _{°} C.

21. Le système d'épuration de gaz d'échappement selon la revendication 19, caractérisé par un premier catalyseur à trois voies (4D) disposé en aval de ladite première partie dudit catalyseur de réduction des oxydes d'azote (3D) et un second catalyseur à trois voies (7D) disposé en aval de ladite seconde partie dudit catalyseur (6D) de réduction des oxydes d'azote.

22. Le système d'épuration de gaz d'échappement selon la revendication 1, caractérisé en ce que ledit catalyseur (2E) est disposé en un emplacement dudit conduit d'échappement où la température du catalyseur tend à augmenter au-dessus d'une gamme de température comprise entre la température T₁ et la température T₂ pour laquelle ledit catalyseur (2E) peut assurer des débits élevés d'épuration de NOx pour un état normal de fonctionnement du moteur,
caractérisé par:
- des moyens de refroidissement (3E) pour refroidir ledit catalyseur;
- des moyens de mesure de température de catalyseur (4E) pour mesurer la température dudit catalyseur (2E),
dans lequel lesdits moyens pour produire de façon répétitive un état d'augmentation de température de catalyseur comportent des moyens qui commencent le refroidissement dudit catalyseur en faisant fonctionner lesdits moyens de refroidissement lorsque la température de catalyseur mesurée par lesdits moyens de mesure de température de catalyseur augmente au-dessus de la température T₂ et qui arrêtent le refroidissement lorsque la température de catalyseur mesurée par lesdits moyens de mesure de catalyseur tombe en-dessous de la température Ti.

23. Le système d'épuration de gaz d'échappement selon la revendication 1, dans lequel ledit catalyseur (2F) est disposé en un emplacement dudit conduit de gaz d'échappement où la température du catalyseur tend à augmenter vers une température pour laquelle ledit catalyseur (2F) peut assurer le taux d'épuration de NOx le plus élevé dans un état normal de fonctionnement de moteur,
caractérisé par:
- des moyens de réfrigération (3F) pour refroidir ledit catalyseur (2F);
- des moyens de mesure de température de catalyseur (4F) pour mesurer la température dudit catalyseur (2F);
dans lequel lesdits moyens pour produire de façon répétitive un état d'augmentation de température de catalyseur comportent des moyens qui commencent la réfrigération dudit catalyseur en faisant fonctionner lesdits moyens de refroidissement lorsque la température de catalyseur mesurée par lesdits moyens de mesure de température de catalyseur dépasse la température To et arrête le refroidissement lorsque la température de catalyseur mesurée par lesdits moyens de mesure de température de catalyseur est inférieure à une température égale à ou inférieure à la température To.

24. Le système d'épuration de gaz d'échappement selon l'une quelconque des revendications 22 et 23, caractérisé en ce que lesdits moyens de refroidissement (3E, 3F) comportent des moyens de fourniture d'air secondaire.

25. Le système d'épuration de gaz d'échappement selon l'une quelconque des revendications 22 et 23, caractérisé en ce que lesdits moyens de refroidissement (3E, 3F) comportent un conduit de dérivation monté en dérivation dudit catalyseur et une valve de dérivation pour commuter l'écoulement de gaz d'échappement entre ledit catalyseur et ledit conduit de dérivation.

26. Le système d'épuration de gaz d'échappement selon la revendication 1, caractérisé par une gamme de températures prédéterminées inférieures à 500 _{°} C.

27. Le système d'épuration de gaz d'échappement selon la revendication 26, caractérisé en ce que ladite gamme de températures prédéterminées est comprise entre 350 _{°} C et 450 _{°} C.
